# EUROPEAN PATENT APPLICATION

(11) **EP 4 838 952 A1**
(43) Date of publication of application: **11.11.2026**
(21) Application number: 25741498.7
(22) Date of filing: 14.01.2025
(51) Int. Cl.: H04W 36/00

(54) **COMMUNICATION METHOD AND COMMUNICATION APPARATUS**

(30) Priority: 19.01.2024 CN 202410082649
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Huawei European IPR
(86) International application number: PCT/CN2025/072341
(87) International publication number: WO 2025/152937

(57) **Abstract**

This application provides a communication method and a communication apparatus, to resolve a conflict problem of different handover procedures. The method includes: receiving, by a terminal, from a network information that the network does not support the first handover mode, or allows the terminal to use the second handover mode to switch a path. In this way, the terminal switches the first path to the second path according to the information by using the second handover mode. In this way, the network can control the path switching of the terminal, thereby avoiding conflicts between different handover modes.

## Description

### Cross-Reference to Related Applications

This application claims priority to Chinese Patent Application No. 202410082649.6, filed with the China National Intellectual Property Administration of the People's Republic of China on January 19, 2024, and entitled "Communication Method and Communication Apparatus." The entire content of this application is incorporated herein by reference.

### TECHNICAL FIELD

This application relates to the field of communications, and specifically, to a communication method and a communication apparatus.

### BACKGROUND

Handover can support the movement of user equipment (user equipment, UE). For example, when the UE moves between different radio access networks (radio access network, RAN), handover can enable the UE to switch from a RAN with a poor channel state to a RAN with a better channel state, thereby providing users with better communication services. Handover includes a handover (Handover) procedure and a path switch (Path Switch) procedure. Among them, the Handover procedure is a handover initiated by the network, and the Path Switch procedure is a handover initiated by the UE. However, conflicts may exist between different handover procedures.

Therefore, how to avoid conflicts between different handover procedures is an urgent problem to be solved.

### SUMMARY

This application provides a communication method and a communication apparatus, which can resolve the conflict problem between different handover procedures.

To achieve the above objectives, this application adopts the following technical solutions:
According to the first aspect, a communication method is provided. The method may be performed by a terminal.

The method includes: receiving, by a terminal, first information from a network, where the first information indicates that the network does not support a first handover mode, or indicates that the terminal is allowed to switch a path through a second handover mode; the first handover mode is a handover mode initiated by a radio access network device, and the second handover mode is a handover mode initiated by the terminal; and switching, based on the first information, the first path to the second path through the second handover mode; the first path includes a connection between the terminal and a first access network device, and the second path includes a connection between the terminal and a second access network device. Switching the path may also be understood as switching from a source RAN (the first access network device) to a target RAN (the second access network device)). For example, the second handover mode is a Path Switch handover. It should be understood that the UE accesses the network through the first path, and the first path includes the first access network device and an access and mobility management network element. The first path may further include a user plane network element. The first path in this embodiment may refer to a user plane path from the UE to the user plane network element through the first access network device. The first path may also be understood as a path through which the terminal currently transmits data.

In a possible implementation, the terminal receives the first information from a first path, or receives the first information from another path different from the first path. For example, the terminal receives the first information during a process of registering with a network. A path for the terminal to register with the network may be the first path, or may be another path.

It may be understood that, in this application, the terminal in the first aspect and the following aspects may be a terminal device (for example, a mobile phone), or may be a chip (system) that can be disposed in the terminal device. In other words, the communication method in the first aspect may be performed by a terminal device, or may be performed by a chip (system) in the terminal device.

Based on the communication method provided in the first aspect, the network sends, to the terminal, information about switching a path in a second handover mode, thereby implementing the network's control over the terminal's path switching. This ensures that after receiving the information about switching the path in the second handover mode, the terminal switches the path in the second handover mode, thereby avoiding conflicts between different switching procedures.

In a possible implementation, the switching the first path to the second path in a second handover mode based on the first information includes: sending, by the terminal, a session establishment request message or a session modification request message by using the second path, where the session establishment request message or the session modification request message includes a handover indication and an identifier of the first session. the handover indication is used to instruct to switch the first session transmitted on the first path to the second path for transmission; and; Alternatively, the terminal sends the first request by using the second path, where the first request is used to request to switch the session transmitted on the first path to the second path for transmission. A session granularity may be switched by using the switching indication and the identifier of the first session, and may be understood as switching a specific session to another path for transmission. Alternatively, switching of a path granularity may be implemented by using the first request, which may be understood as switching all sessions on a path to another path for transmission.

In a possible implementation, before the first path is switched to the second path in the second handover mode, when the first switching condition is met, the first path is switched to the second path in the second handover mode. The first handover condition is that signal quality between the terminal and the first access network device is lower than a first threshold. The first threshold may be configured by the first access network device, or locally configured by the terminal. When the signal quality is lower than the first threshold, the terminal considers that the path between the terminal and the first access network device is inappropriate, thereby triggering handover.

In a possible implementation, the radio access technology (RAT) corresponding to the first access network device is the first RAT, and the RAT corresponding to the second access network device is the second RAT. The first information indicates that the network does not support the first handover mode, or indicates that the terminal is allowed to switch a path through the second handover mode. This includes: the first information indicates that the network does not support switching between the first RAT and the second RAT through the first handover mode, or indicates that the terminal is allowed to switch between the first RAT and the second RAT through the second handover mode.

In a possible implementation, the first information includes policy information, and the policy information indicates that the terminal is preferentially allowed to access an access network device corresponding to the first RAT type. The method further includes: switching the second path to the first path through the second handover mode, where the first path includes a connection between the terminal and the first access network device, and the RAT corresponding to the first access network device is the first RAT. By setting an RAT with a higher priority, the terminal can transmit data as much as possible on a path corresponding to the RAT with a higher priority, thereby ensuring a better communication experience for the user.

In a possible implementation, switching the second path to the first path by using a second handover mode includes: when a second switching condition is met, switching the second path to the first path by using the second handover mode. The second switching condition is that signal quality between the terminal and the access network device corresponding to the first RAT type is higher than a second threshold. When the terminal determines that the signal quality of the path corresponding to the RAT with a higher priority is higher than the second threshold, the terminal switches to the path corresponding to the RAT with a higher priority to transmit data. For example, the priority of the sixth generation (6th Generation, 6G) is higher than that of the fifth generation (5th Generation, 5G)). The terminal determines that the signal quality between the terminal and the access network device corresponding to the 6G is higher than the second threshold, and then switches to the path corresponding to the 6G to transmit data. In this way, the terminal can transmit data on the path with a higher priority as much as possible. The second threshold may be configured by the access network device, or may be locally configured by the terminal.

According to the second aspect, a communication method is provided. This method may be performed by an access and mobility management network element, or may be performed by a chip or circuit of the access and mobility management network element. This application does not impose any limitation on this. For ease of description, the following uses an example in which the method is performed by the access and mobility management network element for description.

This method includes: sending first information to a terminal, where the first information indicates that the network does not support the first handover mode, or indicates that the terminal is allowed to switch a path through the second handover mode. The first handover mode is a handover mode initiated by a radio access network device, and the second handover mode is a handover mode initiated by the terminal. Receiving, through the second path, a first request sent by the terminal, where the first request is used to request to switch a session transmitted on the first path to the second path for transmission. The first path includes a connection between the terminal and the first access network device, and the second path includes a connection between the terminal and the second access network device. The handover may also be understood as a handover from a source RAN (the first access network device) to a target RAN (the second access network device)). For example, the second handover mode is a Path Switch handover. It should be understood that the UE accesses the network through the first path, and the first path includes the first access network device and the access and mobility management network element. The first path may further include a user plane network element. The first path in this embodiment may refer to a user plane path from the UE to the user plane network element through the first access network device. The first path may also be understood as a path through which the terminal currently transmits data.

In the communication method provided in the second aspect, the access and mobility management network element sends, to the terminal by using the access and mobility management network element, the information about switching a path in the second handover manner, so that the network controls the terminal to switch a path, so that after the terminal receives the information about switching a path in the second handover manner, The session transmitted on the first path is switched over to the second path for transmission in the second handover mode, so as to avoid a conflict between different switching procedures.

In a possible implementation, before the sending the first information to the terminal, the method further includes: determining the first information based on a configuration of a network management system; or receive the first information sent by the policy control network element or the data management network element. For example, the network management system configures, for the access and mobility management network element, that the first handover manner is not supported, or the policy control network element or the data management network element sends, to the access and mobility management network element, a message indicating that the terminal is allowed to switch the path in the second handover manner. For another example, the network management system configures, for the access and mobility management network element, that handover between the first RAT and the second RAT in the first handover manner is not supported, for example, a terrestrial communications network (Terrestrial Network) is not supported in the first handover manner. TN) and a non-terrestrial communications network (Non-Terrestrial Network, NTN), or a first handover manner between 5G and 6G is not supported.

In a possible implementation, the first request is a session establishment request message or a session modification request message. The session establishment request message or the session modification request message includes a handover indication and an identifier of the first session. The handover indication is used to indicate that the first session transmitted through the first path is to be switched to transmission through the second path. By using the handover indication and the identifier of the first session, a handover at a session granularity can be implemented. This can be understood as switching a specific session to transmission through another path.

According to a third aspect, a communication method is provided. The method may be performed by an access network device, or may be performed by a chip or a circuit of the access network device. This application does not impose a limitation thereto. For ease of description, the following uses an example in which the method is performed by an access network device for description.

The method includes: receiving handover policy information, where the handover policy information indicates that a terminal is allowed to switch a path in a second handover manner, and the second handover manner is a handover manner initiated by the terminal; and sending, based on the handover policy information, handover configuration information to the terminal, where the handover configuration information is used by the terminal to switch the path in the second handover manner.

In the communication method provided based on the third aspect, the information allowing the terminal to switch a path in a second handover mode is received by the access network device. In this way, switching configuration information used by the terminal to switch the path in the second handover mode is generated, so that the terminal determines, based on the switching configuration information, a switching condition for switching the path in the second handover mode. When the switching condition is met, the terminal switches, in the second handover mode, a session transmitted on the first path to the second path, thereby avoiding conflicts between different switching procedures.

In a possible implementation, the switching configuration information includes a first switching condition, and the first switching condition is used by the terminal to switch a path in the second handover mode when signal quality between the terminal and the access network device is lower than a first threshold. The first threshold may be configured by the access network device, or may be locally configured by the terminal. When the signal quality is lower than the first threshold, the terminal considers that a path between the terminal and the currently connected access network device is inappropriate, and therefore triggers a handover.

In a possible implementation, the handover configuration information further includes a second handover condition. The second handover condition is used to switch back to the path corresponding to the access network device when the signal quality between the terminal and the access network device corresponding to the access network device is higher than the second threshold. The terminal determines that when the signal quality of the path corresponding to the RAT with a higher priority is higher than the second threshold, the terminal switches to the path corresponding to the RAT with a higher priority to transmit data. For example, the priority of 6G is higher than that of 5G. The terminal determines that when the signal quality between the terminal and the access network device corresponding to 6G is higher than the second threshold, the terminal switches to the path corresponding to 6G to transmit data, thereby ensuring that the terminal transmits data on the path with a higher priority as much as possible. The second threshold may be configured by the access network device, or may be locally configured by the terminal.

In a possible implementation, the first information is sent to the terminal, where the first information indicates that the network does not support the first handover mode, and the first handover mode is a handover mode initiated by the radio access network device.

In a possible implementation, the handover configuration information sent by the access network device to the terminal includes the first information.

In a possible implementation, the first information is determined based on a configuration of the network management system. receive the first information sent by the access and mobility management network element. For example, the network management system configures, for the access network device, that the first handover manner is not supported, or the access and mobility management network element sends, to the terminal, a message indicating that the terminal is allowed to switch a path in the second handover manner. For another example, the network management system configures, for the access network device, that switching between the first RAT and the second RAT in the first handover manner is not supported, for example, switching between the TN and the NTN in the first handover manner is not supported, or switching between 5G and 6G in the first handover manner is not supported.

According to a fourth aspect, a communication method is provided, and the method may be performed by a terminal.

The method includes: receiving, by a terminal, first information from a first network, where the first information indicates that the first network does not support path switching between the first network and the second network in a first handover mode, or indicates that the terminal is allowed to switch a path between the first network and the second network in a second handover mode; and; The first handover manner is a handover manner initiated by the radio access network device, and the second handover manner is a handover manner initiated by the terminal. switch the first path to the second path in a second handover mode according to the first information; and; The first path includes a connection between the terminal and the first access network device, the first access network device corresponds to the first network, the second path includes a connection between the terminal and the second access network device, and the second access network device corresponds to the second network.

In a possible implementation, the terminal receives the first information from the first path corresponding to the first network, or receives the first information from another path different from the first path. For example, the terminal receives the first information in a process of registering with the network, and a path through which the terminal registers with the network may be the first path, or may be another path.

Based on the communication method provided in the fourth aspect, the information about switching a path between the first network and the second network by using the second handover mode is sent to the terminal by using the network, so that the network controls the terminal to switch a path between different networks, so that after the terminal receives the information about switching a path in the second handover mode, A path is switched between different networks in the second handover manner, thereby avoiding a conflict between different handover procedures.

In a possible implementation, the switching the first path to the second path in a second handover mode based on the first information includes: sending, by the terminal, a session establishment request message or a session modification request message by using the second path, where the session establishment request message or the session modification request message includes a handover indication and an identifier of the first session. the handover indication is used to instruct to switch the first session transmitted on the first path to the second path for transmission; and; Alternatively, the terminal sends the first request by using the second path, where the first request is used to request to switch a session transmitted on the first path to the second path for transmission. Session granularity handover may be implemented by using the handover indication and the identifier of the first session, which may be understood as switching a specific session in the first network to the second network for transmission. Alternatively, switching of a path granularity may be implemented by using the first request, which may be understood as switching all sessions on the path corresponding to the first network to the path corresponding to the second network for transmission.

In a possible implementation, before switching the first path to the second path by using the second handover manner, the method further includes: when a third handover condition is met, switching the first path to the second path by using the second handover manner, where the third handover condition is that the signal quality between the terminal and the first access network device is lower than a third threshold. The third threshold may be configured by the first access network device, or may be locally configured by the terminal. When the signal quality is lower than the third threshold, the terminal considers that a path between the terminal and the first access network device is inappropriate, and therefore triggers a handover.

In a possible implementation, the first information includes policy information, and the policy information indicates that the terminal preferentially accesses an access network device corresponding to the first network. The method further includes: switching the second path to the first path by using the second handover manner, where the first path includes a connection between the terminal and the first access network device, and the network type corresponding to the first access network device is the first network. By setting a network with a higher priority, the terminal can transmit data on a path corresponding to the network with the higher priority as much as possible, thereby ensuring a better communication experience for the user.

In one possible implementation, switching the second path to the first path by using a second handover mode includes: when a fourth switching condition is met, switching the second path to the first path by using the second handover mode. The fourth switching condition is that the signal quality between the terminal and the access network device corresponding to the first network is higher than a fourth threshold. When the terminal determines that the signal quality of the path corresponding to the network with a higher priority is higher than the fourth threshold, the terminal switches to the path corresponding to the network with a higher priority to transmit data. For example, the priority of the first network is higher than that of the second network. The terminal determines that the signal quality between the terminal and the access network device corresponding to the first network is higher than the fourth threshold, and then switches to the path corresponding to the first network to transmit data. In this way, the terminal can transmit data on the path with a higher priority as much as possible. The fourth threshold may be configured by the access network device, or may be locally configured by the terminal.

According to the fifth aspect, a communication method is provided. The method may be performed by an access and mobility management network element, or may be performed by a chip or a circuit of the access and mobility management network element. This application does not limit this. For ease of description, the following uses an example in which the method is performed by the access and mobility management network element for description.

The method includes: sending first information to a terminal, where the first information indicates that the first network does not support switching a path between the first network and the second network through the first handover mode, or indicates that the terminal is allowed to switch the path between the first network and the second network through the second handover mode. The first handover mode is a handover mode initiated by a radio access network device, and the second handover mode is a handover mode initiated by the terminal. Receiving, through the second path, the first request sent by the terminal, where the first request is used to request to switch a session transmitted through the first path to the second path for transmission. The first path includes a connection between the terminal and the first access network device, and the second path includes a connection between the terminal and the second access network device. The switching path may also be understood as switching from a source RAN (the first access network device) to a target RAN (the second access network device)). For example, the second handover mode is a Path Switch handover. It should be understood that the UE accesses the network through the first path, and the first path includes the first access network device and an access and mobility management network element. The first path may further include a user plane network element. The first path in this embodiment may refer to a user plane path from the UE to the user plane network element through the first access network device. The first path may also be understood as a path through which the terminal currently transmits data.

In the communication method provided in the fifth aspect, the access and mobility management network element sends, to the terminal by using the access and mobility management network element, information about switching a path between the first network and the second network by using the second handover manner, so as to implement control, by the network, that the terminal switches a path between different networks. In this way, after receiving the information about switching a path in the second handover mode, the terminal switches, in the second handover mode, the session transmitted over the first network to the second network for transmission, thereby avoiding a conflict between different switching procedures.

In a possible implementation, before the sending the first information to the terminal, the method further includes: determining the first information based on a configuration of a network management system; and; receive the first information sent by the policy control network element or the data management network element. For example, the network management system configures, for the access and mobility management network element, that the path switching between the first network and the second network in the first handover manner is not supported, or the policy control network element or the data management network element sends, to the access and mobility management network element, a message indicating that the terminal is allowed to switch the path between the first network and the second network in the second handover manner.

In a possible implementation, the first request is a session establishment request message or a session modification request message. The session establishment request message or the session modification request message includes a handover indication and an identifier of the first session. The handover indication is used to indicate that the first session transmitted through the first path is to be switched to the second path for transmission. By using the handover indication and the identifier of the first session, a handover at a session granularity can be implemented. This can be understood as switching a specific session of the first network to the second network for transmission. Alternatively, by using the first request, a handover at a path granularity can be implemented. This can be understood as switching all sessions corresponding to a path of the first network to the second network corresponding to the path for transmission.

According to the sixth aspect, a communication method is provided. The method may be performed by an access network device, or may be performed by a chip or a circuit of the access network device. This is not limited in this application. For ease of description, the following uses an example in which the method is performed by an access network device for description.

The method includes: receiving handover policy information, where the handover policy information indicates that a terminal is allowed to switch a path between the first network and the second network in a second handover manner, and the second handover manner is a handover manner initiated by the terminal; and sending handover configuration information to the terminal based on the handover policy information, where the handover configuration information is used by the terminal to switch the path between the first network and the second network in the second handover manner.

In the communication method provided based on the sixth aspect, an access network device receives information that allows a terminal to switch a path between a first network and a second network in a second handover manner. In this way, handover configuration information used by the terminal to switch the path in the second handover manner is generated, so that the terminal determines, according to the handover configuration information, a handover condition for switching the path in the second handover manner. When the handover condition is met, the terminal switches, in the second handover manner, a session transmitted by the first network to the second network for transmission, thereby avoiding conflicts between different handover procedures.

In a possible implementation, the handover configuration information includes a third handover condition, and the third handover condition is used by the terminal to switch the path in the second handover manner when signal quality between the terminal and the access network device is lower than a third threshold. The third threshold may be configured by the access network device, or may be locally configured by the terminal. When the signal quality is lower than the third threshold, the terminal considers that a path between the terminal and the currently connected access network device is inappropriate, and therefore triggers a handover.

In a possible implementation, the handover configuration information further includes a fourth handover condition. The fourth handover condition is used to switch back to the path corresponding to the access network device when the signal quality between the terminal and the access network device corresponding to the path is higher than the fourth threshold. When the terminal determines that the signal quality of the path corresponding to the network with a higher priority is higher than the fourth threshold, the terminal switches to the path corresponding to the network with a higher priority to transmit data. For example, the priority of the first network is higher than that of the second network. The terminal determines that the signal quality between the terminal and the access network device corresponding to the first network is higher than the fourth threshold, and then switches to the path corresponding to the first network to transmit data. In this way, the terminal can transmit data on the path with a higher priority as much as possible. The fourth threshold may be configured by the access network device, or may be locally configured by the terminal.

In a possible implementation, the first information is sent to the terminal, where the first information indicates that the network does not support switching a path between the first network and the second network in the first handover manner, and the first handover manner is a handover manner initiated by the radio access network device.

In a possible implementation, the handover configuration information sent by the access network device to the terminal includes the first information.

In a possible implementation, the first information is determined based on a configuration of the network management system. receive the first information sent by the access and mobility management network element. For example, the network management system configures, for the access network device, that the path switching between the first network and the second network in the first handover manner is not supported, or the access and mobility management network element sends, to the terminal, a message indicating that the terminal is allowed to switch the path between the first network and the second network in the second handover manner.

According to a seventh aspect, a communication method is provided. The method may be performed by an access network device, or may be performed by a chip or a circuit of the access network device. This is not limited in this application. For ease of description, the following uses an example in which the access network device performs.

The method includes: receiving handover policy information, where the handover policy information indicates that a terminal is allowed to switch a path in a second handover manner, and the second handover manner is a handover manner initiated by the terminal; and; send path switching indication information to the terminal based on the switching policy information, where the path switching indication information is used by the terminal to switch a path in a second handover mode, the first path includes a connection between the terminal and the first access network device, and the second path includes a connection between the terminal and the second access network device.

In the communication method provided based on the seventh aspect, the access network device receives policy information that allows the terminal to switch a path in a second handover manner. The terminal is then sent handover indication information indicating the terminal to switch the path in the second handover manner. In this way, the network controls the path switching of the terminal, thereby avoiding conflicts between different handover procedures.

In a possible implementation, according to the handover policy information, the method of sending path handover indication information to the terminal includes: determining, according to the handover policy information, to switch the first path of the terminal to the second path; and sending the path handover indication information to the terminal.

In a possible implementation, before determining, according to the handover policy information, to switch the first path of the terminal to the second path, the method further includes: receiving a measurement report sent by the terminal, where the measurement report includes signal quality of a first cell corresponding to the first access network device, and the signal quality of the first cell is lower than a first threshold corresponding to the second path handover manner. The first threshold may be configured by the first access network device, or may be locally configured by the terminal. When the signal quality is lower than the first threshold, the terminal considers that the path between the terminal and the first access network device is inappropriate, and therefore triggers a handover.

In a possible implementation, the measurement report further includes a second cell identifier and corresponding signal quality. The signal quality of the second cell is higher than a second threshold. The method further includes: sending the second cell identifier to the terminal, where the second cell identifier indicates the terminal to switch to the cell information of the second path.

In an implementation, the method provided in the eighth aspect may be performed by a terminal. Before sending the handover indication information to the terminal, the method further includes: determining the handover indication information based on the first information, where the first information indicates that the network does not support the first handover mode, and the first handover mode is a handover mode initiated by a radio access network device.

In a possible implementation, the first information is determined based on the configuration of the network management system; or the first information is received, where the first information is sent by an access and mobility management network element. For related descriptions, refer to the related descriptions of the third aspect above. Details are not described herein again.

According to the eighth aspect, a communication method is provided, and the method may be performed by a terminal.

The method includes: receiving, by the terminal through a first access network device, path switching indication information, according to the path handover indication information, switches the first path to the second path by using a second handover mode. The second handover mode is a handover mode initiated by the terminal, and the first path includes a connection between the terminal and the first access network device, and the second path includes a connection between the terminal and the second access network device.

In the communication method provided based on the eighth aspect, the network sends, to the terminal through a network, handover indication information for switching a path by using a second handover manner. In this way, the network controls the path switching of the terminal, so that after receiving the path switching indication information, the terminal switches the path by using the second handover manner, thereby avoiding conflicts between different handover procedures.

In a possible implementation, before the receiving, by using a first access network device, path switching indication information, the method further includes: the terminal sends capability information, where the capability information indicates that the terminal supports switching a path by using the second handover manner. In this way, the terminal sends the capability information to the first access network device, so that the first access network device determines that the terminal supports the second handover manner.

In a possible implementation, the method includes: sending, to a first access network device, a measurement report, where the measurement report includes signal quality of a first cell corresponding to the first access network device, a second cell identifier, and corresponding signal quality; and receiving the second cell identifier, and switching to the second cell of the second path according to the second cell identifier.

According to a ninth aspect, a communication method is provided. The method may be performed by an access network device, or may be performed by a chip or a circuit of the access network device. This is not limited in this application. For ease of description, the following uses an example in which the access network device performs.

The method includes: receiving handover policy information, where the handover policy information indicates that a terminal is allowed to switch a path between a first network and a second network in a second handover manner, and the second handover manner is a handover manner initiated by the terminal; and; sending path switching indication information to the terminal based on the switching policy information, where the path switching indication information is used by the terminal to switch the first path to the second path in a second handover mode, the first path includes a connection between the terminal and the first access network device, and the second path includes a connection between the terminal and the second access network device. The first access network device belongs to the first network, and the second access network device belongs to the second network.

Based on the communication method provided in the ninth aspect, the access network device receives policy information that allows the terminal to switch a path between the first network and the second network in the second handover manner, and sends, to the terminal, handover indication information that instructs the terminal to switch a path in the second handover manner, so that the network controls the terminal to switch a path. In this way, conflicts between different handover procedures are avoided.

In a possible implementation, the method of sending, based on the handover policy information, a path handover indication to the terminal includes: determining, based on the handover policy information, to switch the first path of the terminal to a second path; and sending the path handover indication to the terminal.

In a possible implementation, before determining, based on the handover policy information, to switch the first path of the terminal to a second path, the method further includes: receiving a measurement report sent by the terminal, where the measurement report includes signal quality of a first cell corresponding to the first access network device, and the signal quality of the first cell is lower than a first threshold corresponding to the second path handover mode. The first threshold may be configured by the first access network device, or may be locally configured by the terminal. When the signal quality is lower than the first threshold, the terminal considers that the path between the terminal and the first access network device is inappropriate, and thus triggers a handover.

In a possible implementation, the measurement report further includes an identifier of a second cell and corresponding signal quality, and the signal quality of the second cell is higher than a second threshold. The method further includes: sending the identifier of the second cell to the terminal, where the identifier of the second cell indicates cell information of the second cell to which the terminal is to be switched.

In a possible implementation, before sending the handover indication information to the terminal, the method further includes: determining the handover indication information based on first information, where the first information indicates that the network does not support switching a path between the first network and the second network in a first handover manner, and the first handover manner is a handover manner initiated by a radio access network device.

In a possible implementation, in a possible implementation, the first information is determined based on a configuration of a network management system; or the first information is received, where the first information is sent by an access and mobility management network element. For related descriptions, refer to the related descriptions of the third aspect above. Details are not described herein again.

According to the tenth aspect, a communication method is provided. The method may be performed by a terminal.

The method includes: receiving, by a first access network device, path handover indication information, where the first access network device corresponds to a first network; and a terminal switches, according to the path handover indication information, the first path to the second path by using a second handover manner, where the second handover manner is a handover manner initiated by the terminal, the first path includes a connection between the terminal and the first access network device, the second path includes a connection between the terminal and a second access network device, and the second access network device corresponds to a second network.

Based on the communication method provided in the tenth aspect, the path switching indication information is sent to the terminal by using the network, so that the network controls the terminal to switch a path, so that the terminal switches a path in the second handover mode after receiving the path switching indication information, thereby avoiding a conflict in different switching procedures.

In a possible implementation, before the receiving path switching indication information by using the first access network device, the method further includes: sending, by the terminal, capability information, where the capability information indicates that the terminal supports path switching between the first network and the second network in the second handover mode.

In a possible implementation, a measurement report is sent to the first access network device, where the measurement report includes signal quality of the first cell corresponding to the first access network device, the second cell identifier, and corresponding signal quality. receiving the second cell identity, and handing over to the second cell on the second path according to the second cell identity.

According to an eleventh aspect, a communications apparatus is provided. The communications apparatus includes a module, such as a transceiver module and a processing module, configured to perform any communication method performed by the terminal in the foregoing description. The transceiver module is configured to perform a corresponding message sending and receiving action, and the processing module may be configured to perform all actions except information receiving and sending.

Optionally, the communications apparatus according to the eleventh aspect may further include a storage module, and the storage module stores a program or an instruction. When the processing module executes the program or the instruction, the communications apparatus can perform any communication method performed by the terminal in the foregoing description.

According to a twelfth aspect, a communications apparatus is provided. The communications apparatus includes a module, such as a transceiver module and a processing module, configured to perform any communication method performed by the access and mobility management network element in the foregoing description. The transceiver module is configured to perform a corresponding message sending and receiving action, and the processing module may be configured to perform all actions except information receiving and sending.

Optionally, the communications apparatus according to the twelfth aspect may further include a storage module, and the storage module stores a program or an instruction. When the processing module executes the program or the instruction, the communications apparatus can perform any communication method performed by the access and mobility management network element in the foregoing description.

According to a thirteenth aspect, a communications apparatus is provided. The communications apparatus includes a module, such as a transceiver module and a processing module, configured to perform any communication method performed by the access network device in the foregoing description. The transceiver module is configured to perform a corresponding message receiving and sending action, and the processing module may be configured to perform all actions except information receiving and sending.

Optionally, the communications apparatus according to the thirteenth aspect may further include a storage module, and the storage module stores a program or an instruction. When the processing module executes the program or the instruction, the communications apparatus can perform any communication method performed by the access network device in the foregoing description.

According to a fourteenth aspect, a communications apparatus is provided. The communications apparatus includes a processor, and the processor is configured to execute the instruction stored in the memory, so that the communications apparatus performs any communication method performed by the terminal in the foregoing description.

In a possible design solution, the communications apparatus may further include the memory. The memory may be integrated with the processor, or may be disposed separately.

According to a fifteenth aspect, a communications apparatus is provided. The communications apparatus includes a processor, where the processor is configured to execute the instruction stored in the memory, so that the communications apparatus performs any communication method performed by the access and mobility management network element in the foregoing description.

In a possible design solution, the communications apparatus may further include the memory. The memory may be integrated with the processor, or may be disposed separately.

According to a sixteenth aspect, a communications apparatus is provided. The communications apparatus includes a processor, and the processor is configured to execute the instruction stored in the memory, so that the communications apparatus performs any communication method performed by the access network device in the foregoing description.

In a possible design solution, the communications apparatus may further include the memory. The memory may be integrated with the processor, or may be disposed separately.

According to a seventeenth aspect, a communications system is provided, including a terminal, where the terminal is configured to perform the method in any one of the first aspect, the fourth aspect, the eighth aspect, and the tenth aspect, and the possible implementations of the first aspect.

Optionally, the communications system further includes an access and mobility management network element, and the access and mobility management network element is configured to perform the method in the second aspect, the fifth aspect, and any possible implementation of the second aspect.

Optionally, the communications system further includes an access network device, and the radio access network device is configured to perform the method in any one of the third aspect, the sixth aspect, the seventh aspect, and the ninth aspect, and the possible implementations of the third aspect.

Optionally, the communications system further includes a network management system, a data management network element, or a policy control network element, configured to perform the method in any possible implementation of the second aspect or the fifth aspect.

According to an eighteenth aspect, a computer readable storage medium is provided, where the computer readable storage medium stores a computer program or code, and when the computer program or code runs on a computer, so that the computer performs the method in any one of the first aspect to the tenth aspect and any one of the possible implementations of the first aspect.

According to a nineteenth aspect, a chip is provided, including at least one processor, where the at least one processor is coupled to a memory, the memory is configured to store a computer program, and the processor is configured to invoke and run the computer program from the memory; and so that the apparatus installed with the chip system performs the method in any one of the first aspect to the tenth aspect and any one of the possible implementations of the first aspect.

Among them, the chip may include an input circuit or interface configured to send information or data, and an output circuit or interface configured to receive information or data.

According to the twentieth aspect, a computer program product is provided. The computer program product includes computer program code. When the computer program code runs on the computer, the method in any one of the first aspect to the tenth aspect and any one of the possible implementations of any one of the first aspect to the tenth aspect is performed.

### BRIEF DESCRIPTION OF DRAWINGS

FIG. 1 is a schematic diagram of a communications system according to an embodiment of this application;
FIG. 2 is a schematic diagram of a system architecture of an application scenario 1 according to this application;
FIG. 3 is a schematic diagram of a system architecture of an application scenario 2 according to this application;
FIG. 4 is a schematic diagram of a handover scenario according to an embodiment of this application;
FIG. 5(a) is a schematic diagram of handover based on a first handover manner according to an embodiment of this application;
FIG. 5(b) is a schematic diagram of handover based on a second handover manner according to an embodiment of this application;
FIG. 6 is a schematic flowchart of a communication method 600 according to an embodiment of this application.
FIG. 7 is a schematic flowchart of a communication method 700 according to an embodiment of this application;
FIG. 8 is a schematic flowchart of a communication method 800 according to an embodiment of this application;
FIG. 9 is a schematic flowchart of a communication method 900 according to an embodiment of this application;
FIG. 10 is a schematic structural diagram of a communication apparatus 1000 according to an embodiment of this application;
FIG. 11 is a schematic structural diagram of a communication apparatus 2000 according to an embodiment of this application.
FIG. 12 is a schematic structural diagram of a chip system 3000 according to an embodiment of this application.

### DESCRIPTION OF EMBODIMENTS

The following describes the technical solutions in this application with reference to the accompanying drawings.

The technical solutions provided in this application can be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can also be applied to device-to-device (device to device, D2D) communication, vehicle-to-everything (vehicle-to-everything, V2X) communication, machine-to-machine (machine to machine, M2M) communication, machine type communication (machine type communication, MTC), and an internet of things (internet of things, IoT) communication system or another communication system.

In a communications system, the portion operated by the operator can be referred to as a public land mobile network (public land mobile network, PLMN)), or it can also be referred to as an operator network, etc. The PLMN is a network established and operated by the government or its approved operators, with the purpose of providing the public with land mobile communications services. It is primarily a public network where mobile network operators (mobile network operator, MNO)) provide users with mobile broadband access services. The PLMN described in the embodiments of this application can specifically be a network that meets the requirements of the 3rd Generation Partnership Project (3rd generation partnership project, 3GPP)) standards, and is referred to as a 3GPP network for short. The 3GPP network typically includes, but is not limited to, a 5G network, a 4th generation mobile communications (4th-generation, 4G) network), and other future communication systems, such as a 6G network, etc.

For ease of description, a PLMN or a 5G network is used as an example for description in this embodiment of this application.

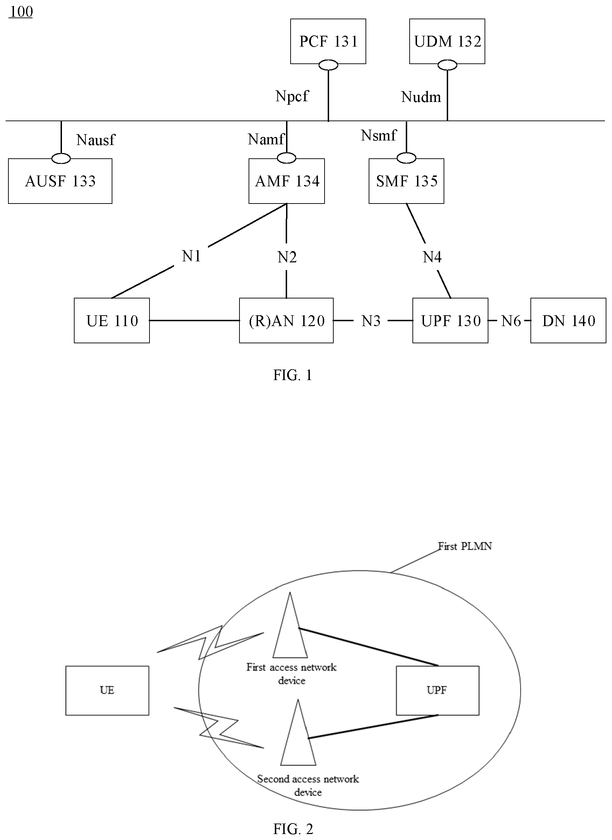

FIG. 1 is a schematic diagram of a network architecture. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes the functions of the network elements of each part.

The terminal device part may include a UE 110, where the UE 110 is a device that provides voice and/or data connectivity to a user. The UE 110 may also be referred to as user equipment UE. The UE 110 in this application is a device with a radio transceiver function, and may communicate with one or more CN devices by using an access network device (or may also be referred to as an access device) in the (radio) access network (R)AN 120. The UE 110 may also be referred to as an access terminal, a terminal, a subscriber unit, a subscriber station, a mobile station, a mobile station, a remote station, a remote terminal, a mobile device, a user terminal, a user agent, a user apparatus, or the like. The UE 110 may be deployed on land, including indoors or outdoors, handheld, or vehicle-mounted. It can also be deployed on the water surface (e.g., a ship). It can also be deployed in the air (e.g., on aircraft, balloons, satellites, etc.). The UE 110 may be a cellular phone, a cordless phone, a session initiation protocol (SIP) phone, a smart phone, a mobile phone, a wireless local loop (WLL) station, a personal digital assistant (PDA), or the like. Alternatively, the UE 110 may be a handheld device with a wireless communication function, a computing device, or another device connected to a wireless modem, an in-vehicle device, a wearable device, an unmanned aerial vehicle device, or a terminal in the Internet of Things, the Internet of Vehicles, a 5G network, or a terminal in any form in a future network, or a relay user A device or a terminal in a future evolved 6G network. For example, the relay user equipment may be a 5G home gateway (residential gateway, RG). For example, the UE 110 may be a virtual reality (virtual reality, VR) terminal, an augmented reality (augmented reality), (AR) terminals, wireless terminals in industrial control, wireless terminals in driverless, wireless terminals in telemedicine, wireless terminals in smart grids, wireless terminals in transportation security, wireless terminals in smart cities, and wireless terminals in smart homes. The terminal device herein refers to a 3GPP terminal. A type, a type, or the like of the terminal device is not limited in this embodiment of this application. For ease of description, an example in which UE refers to a terminal device is used for description in this application.

The (R)AN 120 may include one or more access network elements or access network devices, and an interface between the access network device and the terminal device may be a Uu interface (or referred to as an air interface, that is, a message exchanged between the access network device and the terminal device may be referred to as an air interface message). Certainly, in future communication, the interface name may remain unchanged, or may be replaced by another name. This is not limited in this application. The (R)AN 120 is a device that provides a wireless communication function for the UE 110, and may connect the terminal device to a node or a device in a wireless network, or may be referred to as a network device. The (R)AN 120 may be considered as a sub-network of the operator network, and is an implementation system between the service node and the UE 110 in the operator network. For example, the UE 110 may be connected to a service node in an operator network by using the (R)AN 120, so as to obtain a service provided by the service node. The (R)AN 120 includes but is not limited to a next generation node base station node (next generation node base station, gNB) in a 5G system, and an evolved node B (evolved node B) in a long term evolution (long term evolution, LTE). eNB), a radio network controller (RNC), a node B (node B, NB), a base station controller (base station controller, BSC), a base transceiver station (base transceiver station, BTS), and a home base station (for example, home evolved nodeB, or home nodeB, HNB), a base band unit (base band unit, BBU), a transmission and receiving point (transmitting and receiving point, TRP), a transmission point (transmitting point, TP), a small cell device, a mobile switching center, a network device in a future network, or the like. The access network device may also be a module or a unit that implements a function of a base station, for example, including a centralized unit (central unit, CU) and a distributed unit (distributed unit, DU). In a possible network structure, the CU may be configured to support radio resource control (radio resource control, RRC), a packet data convergence protocol (packet data convergence protocol, PDCP), and a service data adaptation protocol (service data adaptation protocol). Communication under protocols such as SDAP) The DU may be configured to support communication under a radio link control (radio link control, RLC) layer protocol, a medium access control (medium access control, MAC) layer protocol, and a physical layer protocol. A specific technology and a specific device form used by the access network device are not limited in this embodiment of this application. In systems that use different radio access technologies, names of devices having an access network device function may be different. For ease of description, in all the embodiments of this application, the foregoing apparatuses that provide a wireless communication function for the UE 110 are collectively referred to as an access network device or a RAN for short. It should be understood that a specific type of the access network device is not limited in this specification.

The CN part may include but is not limited to the following network functions (network function, NF): user plane function (user plane function, UPF) 130, policy control function (policy control function, PCF) 131, unified data management function (unified data management, UDM) 132, authentication server function (authentication server function, AUSF) 133, access and mobility management function (access and mobility management function, AMF) 134, session management function (session management function, SMF) 135.

The data network DN 140 is usually a network located outside a carrier network, for example, a third-party network, or an Internet service.

The following further briefly describes the NF functions included in the CN.
1. The UPF 130 is a gateway provided by an operator, and is a gateway for communication between the operator network and the DN 140. The UPF 130 network function includes user plane-related functions such as data packet routing and transmission, data packet detection, service usage reporting, quality of service (quality of service, QoS) processing, uplink data packet detection, and downlink data packet storage. In the future communications system, the user plane function network element may still be a UPF network element, or may have another name. This is not limited in this application.
2. The PCF 131 is a control plane function provided by an operator, mainly supports providing a unified policy framework to control network behavior, provides a policy rule for the control layer network function, and is responsible for obtaining user subscription information related to policy decision. For example, the PCF 131 may be divided into two types of PCFs with different functions: a UE-PCF and an AMF-PCF. The UE-PCF may be configured to generate a UE policy (UE policy), that is, a policy sent to the UE 110. A sending path is UE-PCF--->AMF--->UE. In this case, the AMF 134 does not parse content of the UE policy, that is, the AMF 134 transparently transmits the UE policy. The AM-PCF may be configured to generate an AM policy, that is, a policy used for access management that is sent to the AMF 134. A sending path is: UE-PCF--->AMF. Further, the AMF 134 may further send a part or all of the access management policy to the RAN 120. In the future communications system, the policy control function network element may still be a PCF network element, or may have another name. This is not limited in this application.
3. UDM 132 is a control plane function provided by an operator. It is responsible for storing information such as the subscriber permanent identifier (SUPI) of subscribers who have subscribed to the operator's network, the public subscription identifier (GPSI) for public use by subscribers, and credentials. During transmission, the SUPI is first encrypted, and the encrypted SUPI is referred to as a hidden subscription concealed identifier (SUCI). The information stored by the UDM network function 132 can be used for authentication and authorization when UE 110 accesses the operator's network. Specifically, the subscribers of the operator's network mentioned above can be users who use the services provided by the operator's network. For example, users using a SIM card of China Telecom, or users using a SIM card of China Mobile, etc. The credential of the above-mentioned subscribers can be a small file saved in the mobile phone chip card, such as a long-term key or information related to encryption of the mobile phone chip card, which is used for authentication and/or authorization. In future communication systems, the unified data management function network element may still be a UDM network element, or may have another name. This application does not impose any limitation.
4. AUSF 133 is a control plane function provided by the operator, typically used for level-1 authentication, i.e., the authentication between the terminal device 110 (a subscribed user) and the operator's network. After receiving an authentication request initiated by the subscribed user, the AUSF network function 133 may authenticate and/or authorize the subscribed user based on the authentication information and/or authorization information stored in the UDM network function 132, or may generate the authentication and/or authorization information of the subscribed user through the UDM network function 132. The AUSF network function 133 may provide feedback of the authentication information and/or authorization information to the subscribed user. In future communication systems, the authentication server function network element may still be an AUSF network element, or may have another name. This application does not impose any limitation.
5. AMF 134 is a control plane network function provided by the operator network, responsible for access control and mobility management for UE 110 accessing the operator network. For example, it includes functions such as mobile state management, assigning a temporary identity identifier to a user, and authenticating and authorizing the user. In future communication systems, the access management network element may still be an AMF network element, or may have another name. This application does not impose any limitation.
6. SMF 135 is a control plane network function provided by an operator network. It is responsible for managing the protocol data unit (PDU) session of the UE 110 (including session establishment, modification, and release). It is also used for the selection and reselection of user plane function network elements, the allocation of the internet protocol (IP) address of the terminal device, quality of service (QoS) control, and other session-related functions. In future communication systems, the session management function network element may still be an SMF network element, or it may have another name. This application does not impose any limitations.

It can be understood that the foregoing network element or function may be a physical entity in a hardware device, or may be a software instance running on dedicated hardware, or may be a virtualized function instantiated on a shared platform (for example, a cloud platform). In short, an NF can be implemented by hardware or by software.

In Figure 1, Npcf, Nudm, Nausf, Namf, Nsmf, N1, N2, N3, N4, and N6 are interface sequence numbers. For example, the meanings of the above interface sequence numbers can be referred to the meanings defined in the 3GPP standard protocol. This application does not impose any limitation on the meanings of the above interface sequence numbers. It should be noted that the names of the interfaces between the various network functions in Figure 1 are merely examples. In specific implementation, the names of the interfaces of the system architecture may also be other names. This application does not impose any limitation on this. In addition, the names of the messages (or signaling) transmitted between the various network elements are also merely examples, and do not impose any limitation on the functions of the messages themselves.

It should be noted that in the architecture shown in Figure 1, the interface between the radio access network and the 5G core network is referred to as the NG interface (not shown in the figure). The gNBs are connected to each other through the Xn interface. The gNB and the 5GC are connected through the NG interface. Among them, the NG interface includes the NG-C interface and the NG-U interface. The NG-C interface is a control plane interface, connecting the gNB and the AMF, and transmitting control plane data. The NG-U interface is a user plane interface, connecting the gNB and the UPF, and transmitting user plane data. The main functions of the NG interface include but are not limited to: paging, UE context connection, UE mobility management, PDU session management, NAS signaling transmission, etc.

It should be understood that the network architecture 100 described above is merely a network architecture described from the perspective of a service-based architecture. In this service-based architecture, the PLMN may, according to the requirements of specific scenarios, orderly and as needed combine some or all of the network functions, thereby achieving the customization of network capabilities and services. This allows for the deployment of dedicated networks for different services, that is, the implementation of 5G network slicing (network slicing). The network slicing technology enables operators to respond more flexibly and quickly to customer needs, and supports flexible allocation of network resources.

For ease of description, network functions (such as the UPF 130...SMF 135) are collectively referred to as/shortly referred to as an NF in the embodiments of this application. In other words, the NF described below in the embodiments of this application may be replaced with any network function. In addition, the UE 110 is referred to as UE in this embodiment of this application, that is, all UE described in the following embodiments of this application may be replaced with a terminal device. FIG. 1 schematically describes only some network functions, and the NF described below is not limited to the network functions shown in FIG. 1.

It should be understood that the AMF, the SMF, the UPF, the AUSF, the PCF, and the UDM shown in FIG. 1 may be understood as network elements in a core network configured to implement different functions, for example, may be combined as required to form a network slice. The core network network elements may be independent devices of each other, or may be integrated into a same device to implement different functions. A specific form of the foregoing network elements is not limited in this application.

It should be further understood that the foregoing names are defined only for the convenience of distinguishing different functions, and shall not constitute any limitation on this application. This application does not exclude the possibility of using another name in the 5G network and another future network. For example, in the 6G network, some or all of the foregoing network elements may use a term in 5G, or may use another name or the like.

Below is an introduction to several application scenarios related to this application:
Application Scenario 1: Please refer to FIG. 2. FIG. 2 is a schematic diagram of a system architecture of an application scenario 1 according to an embodiment of this application. As shown in FIG. 2, the system architecture includes a UE, a first access network device, a second access network device, and a UPF. FIG. 2 uses an example in which the system architecture includes two access network devices. The system architecture may further include more access network devices. This is not limited in this embodiment of this application. As shown in FIG. 2, the UE is connected to the first access network device and the second access network device, and the UE is connected to a same UPF through the first access network device and the second access network device. The first access network device, the second access network device, and the UPF belong to a same PLMN, that is, the first PLMN.

Among them, the descriptions of the UE and UPF can be referred to the relevant explanations and descriptions of the UE 110 and the UPF 130 in FIG. 1.

Among them, the first access network device and the second access network device are access network devices of a 3GPP access type. For descriptions of the access network device, refer to (R)AN 120 in FIG. 1. The radio access technology (radio access technology, RAT) supported by the first access network device and the second access network device may be the same or different. In other words, the radio access technology (radio access technology, RAT) provided by the first access network device and the second access network device may be the same or different.

For example, the radio access technology type may be evolved universal terrestrial radio access (evolved universal terrestrial radio access, E-UTRA), non-3GPP (Non-3GPP), 5G NR, 5G NR (NTN), or 6G. 5G NR may also be referred to as TN NR, and 5G NR (NTN) may be further classified into low earth orbit (low earth orbit, LEO), medium earth orbit (medium earth orbit, MEO), and geostationary earth orbit (geostationary earth orbit, GEO).

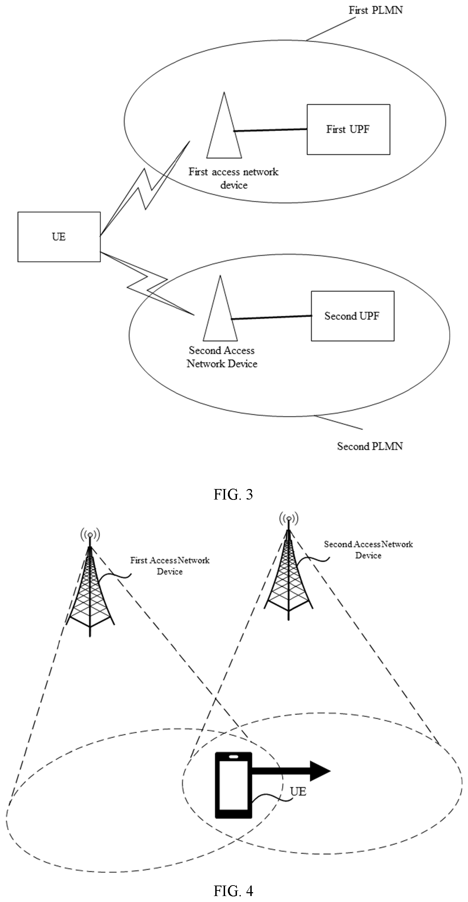

Application scenario 2: Referring to FIG. 3, FIG. 3 is a schematic diagram of a system architecture in an application scenario 2 according to an embodiment of this application. As shown in FIG. 3, the system architecture includes UE, a first access network device, a second access network device, a first UPF, and a second UPF. In FIG. 3, an example in which the system architecture includes two access network devices is used. The system architecture may further include more access network devices. This is not limited in this embodiment of this application. As shown in FIG. 3, UE is connected to a first access network device and a second access network device, and the UE is connected to a first UPF by using the first access network device, and is connected to a second UPF by using the second access network device. The first access network device and the first UPF belong to the first PLMN, and the second access network device and the second UPF belong to the second PLMN. The first PLMN is different from the second PLMN. An interface may further exist between the first UPF and the second UPF, and is used for data transmission.

For the introduction of the UE, access network device, and UPF in Scenario 2 of application, please refer to the description in Scenario 1 of application. This will not be repeated here.

To facilitate understanding of the embodiments of this application, the following provides a brief introduction to the technologies involved in the embodiments of this application.

### 1. Handover, which can also be referred to as cell handover.

A cell can be considered as a wireless signal coverage area that provides identification through a physical cell identifier (physical cell identifier, PCI)) or a global cell identifier (cell global identifier, CGI)). The coverage area of each access network device (for example, a base station) can be divided into one or more cells. In the embodiments of this application, different cells may correspond to different base stations. In other words, different cells may be managed by different base stations, or different cells may belong to different RANs.

The above description of the cell is an example rather than a limitation. With the development of technology, concepts with functions the same or similar to those of the cell may emerge. These concepts are also applicable to the embodiments of this application.

Due to the mobility of the UE or changes in the channel state, the cell connected to the UE may change. That is, the UE may switch from one cell to another cell. The cell before the handover may be referred to as a source cell or an anchor (anchor) cell. The cell after the handover may be referred to as a target cell. As an optional example, cell handover may be interpreted as: the UE performs data transmission in the target cell and stops performing data transmission in the source cell. Alternatively, cell handover may be interpreted as a change in the transmission cell.

Figure 4 is a schematic diagram of a handover scenario.

In Figure 4, the UE is currently performing data transmission within the range of the first access network device. As the UE moves from the first access network device to the second access network device, the channel state of the first access network device deteriorates. The UE can then perform data transmission in a cell of the second access network device, and no longer uses the cell of the first access network device for data transmission. In this case, the first access network device can be referred to as a source RAN, and the second access network device can be referred to as a target RAN. The process from data transmission through the source RAN to data transmission through the target RAN can be referred to as handover.

### 2. The handover may include a first handover mode and a second handover mode.

For example, the first handover mode and the second handover mode may be applicable to a multi-connectivity scenario. In a scenario with two connections, it may also be referred to as a dual connectivity scenario, for example, dualsteer. In a multi-connectivity scenario, the UE may establish multiple RRC connections with multiple RANs, and send or receive data through these multiple RRC connections. If the signal quality of one of the RRC connections is poor, the UE may use another RRC connection for communication. For example, after the UE establishes two RRC connections with RAN1 and RAN2 respectively, if the signal quality of the RRC connection between the UE and RAN1 is poor, the terminal may disconnect the RRC connection between the UE and RAN1, and use the RRC connection between the UE and RAN2 to transmit data. Alternatively, the terminal may no longer use the RRC connection of RAN1 to transmit data, but instead use the RRC connection of RAN2 to transmit data. In this case, the RRC connection of RAN1 may be retained, and signaling may continue to be transmitted through the RRC connection of RAN1. Alternatively, the signaling may be transmitted through the RRC connection of RAN2. These situations may also be referred to as dual connectivity handovers.

It should be noted that the first handover mode and the second handover mode may also be applicable to a single-connection scenario. The application scenarios of the first handover mode and the second handover mode are not limited by the present invention.

Below, the two scenarios are introduced respectively:

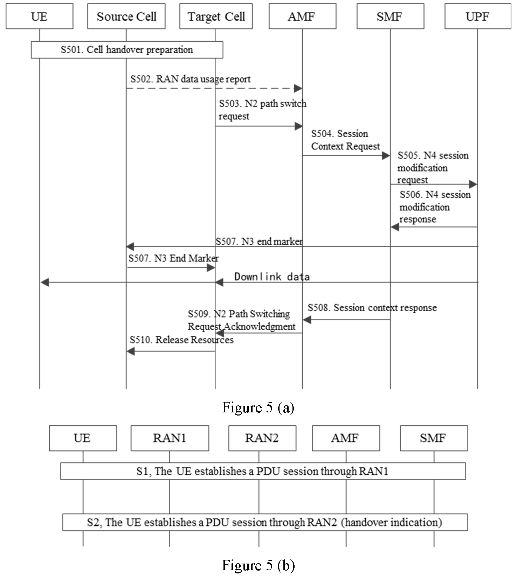

2.1 For example, the first handover mode such as handover (Handover) may be a handover based on an Xn interface. FIG. 5(a) is a schematic diagram of handover based on the first handover mode according to an embodiment of this application, for example, a schematic diagram of handover of a cell served by an Xn interface. The Xn interface is an interface between the first access network device and the second access network device. If the signal quality of the source cell is relatively poor, the UE needs to perform handover to the target cell. In this case, handover of a cell based on the Xn interface may be performed. The source cell may belong to the first access network device, and the target cell may belong to the second access network device. In a process of handover of a cell based on the Xn interface, the AMF serving the UE is usually unchanged.

S501, Prepare for cell handover.

Before performing handover, the UE and the source cell need to perform a handover preparation operation. For example, the source cell configures the UE to perform a measurement procedure. The UE performs measurement on signal quality of surrounding cells (including the target cell) according to the measurement configuration, and reports a measurement report to the source cell. The source cell determines, according to the measurement report, to perform a handover procedure for the UE.

S502: The source cell sends a RAN usage data report (RAN Usage data report) to the AMF.

If the PLMN has configured a second radio access technology (radio access technology, RAT) usage data report, then the source cell can provide the RAN usage data report to the AMF. The report may include N2 session information (N2 SM Information) and other content.

S503: The target cell sends an N2 path switch request (N2 Path Switch Request) to the AMF.

The target cell sends an N2 path switch request message to the AMF, notifying the AMF that the UE has moved to a new cell and providing a list of PDU sessions to be switched. The N2 path switch request message may include N2 SM Information and other content.

S504: The AMF sends a session context request (Nsmf_PDUSession_UpdateSMContext Request) to the SMF.

After receiving the N2 SM information of the source cell and the target cell, the AMF buffers the related information and sends the N2 SM information to the SMF.

S505. The SMF sends an N4 session modification request (N4 Session Modification Request) to the UPF.

According to network deployment, CN tunnel information (CN Tunnel Info) of the UPF used to connect the target cell and the source cell may be different. If the CN tunnel information of the UPF needs to be reallocated, the CN tunnel information is allocated by the SMF. In this case, the SMF may provide the CN tunnel information for the UPF by using the N4 session modification request.

S506. The UPF sends an N4 session modification response (N4 Session Modification Response) to the SMF.

The UPF may send the N4 session modification response to the SMF after the PDU session corresponding to the N4 session modification request is switched. Optionally, for a PDU session for which a user plane resource has not been released, if the UPF allocates CN tunnel information and needs to allocate different CN tunnel information, the UPF may add the tunnel information of the uplink traffic to the N4 session modification response.

S507: The UPF sends an N3 end marker (N3 End Marker).

After a path switch, the UPF may send one or more "End Marker" data tables to each N3 tunnel on the old path, to assist the target cell in performing reordering. Subsequently, the UPF may send downlink data to the target cell.

S508: The SMF sends a session context response (Nsmf_PDUSession_UpdateSMContext Response)) to the AMF.

For a PDU session with a successful handover, the SMF sends CN tunnel information to the AMF through the session context response. This CN tunnel information is used to establish an N3 tunnel. For a PDU session that is deactivated or whose user plane resources are released, the session context response sent by the SMF to the AMF does not carry CN tunnel information, and then the SMF releases the PDU session. S508 may be performed at any time after the SMF receives the N4 session modification response.

S509: The AMF sends an N2 path switch request acknowledgment (N2 Path Switch Request Ack) to the target cell.

The N2 path switch request acknowledgment may include content such as N2 SM Information, failed PDU sessions (Failed PDU Sessions), and a UE radio capability identifier (UE Radio Capability ID). The AMF may write the CN tunnel information in the session context response as a part of the N2 SM Information into the N2 path switch request acknowledgment after receiving the session context response, and then send it to the target cell.

S510: The target cell instructs the source cell to release resources.

The target cell may indicate to the source cell that the handover is successful, thereby triggering the source cell to release resources.

2.2 The second handover method, for example, path switching (path switch), may be initiated by the UE to perform a second handover method procedure. FIG. 5 (b) is a schematic diagram of switching based on the second handover method according to an embodiment of this application.

Step 1: The UE establishes a PDU session in RAN1.

The UE sends a PDU session establishment request message through RAN1. The request message includes the PDU Session ID.

The AMF selects an SMF, which is responsible for managing the PDU session.

The SMF selects a UPF and assigns an IP address to the session, which is then sent to the UE (so that the UE can use this IP address to send data). The SMF is responsible for configuring the N3 interface between RAN1 and the UPF.

RAN1 configures a radio bearer for data transmission between itself and the UE.

The AMF stores the SMF and PDU Session ID in the UDM.

Step 2: The UE establishes a PDU session through RAN2 via a RAN2.

The UE selects RAN2 and sends a PDU session establishment request message through RAN2. The request message includes the PDU Session ID and a handover indication.

After receiving the request message, the AMF obtains the SMF corresponding to the PDU Session ID from the UDM.

The SMF continues to maintain the IP address of the PDU session unchanged (i.e., the UE can continue to use this IP address to send data, without the need to change it). The SMF is then responsible for configuring the N3 interface between RAN2 and the UPF (so that the UPF will send the UE's downlink data to RAN2 instead of RAN1));
RAN2 configuration and the data radio bearer between the UE (in this way, the UE sends uplink data to RAN2 instead of RAN1).)

During the path switching process, the source base station does not need to interact with the target base station, that is, there is no need for an Xn interface.

During the path switching process, the UE actively initiates step 2 of the PDU session establishment procedure, carrying a handover indication.

During the handover procedure, since both the first handover method and the second handover method (for example, the Handover procedure and the Path Switch procedure) can support the change of the data transmission path when the UE moves. However, if the coordination between the two procedures is not properly done, there may be conflicts. For example, when the UE moves from RAN1 to RAN2, RAN1 wants to switch the UE to RAN2 through the Handover procedure, but the UE itself switches to RAN2 through the Path Switch procedure. However, conflicts may arise between different handover procedures. The Handover procedure is initiated by the network, while the Path Switch procedure is initiated by the UE itself. The network controls the UE to perform path switching, thereby avoiding conflicts between the two handover methods.

The first handover method requires the configuration of the Xn interface. From a deployment perspective, the handover procedure within the same PLMN requires the configuration of the Xn interface (an interface between RANs). For example, when satellite access is used for ground stations and the ground stations are located far apart, it is not necessarily the case that satellite access is used between the ground stations and that the Xn interface is necessarily configured between them. On the other hand, the handover procedure between different PLMNs requires the configuration of the AMF-to-AMF interface. For example, when the source RAN and the target RAN belong to different equipment vendors, or when the source AMF and the target AMF belong to different equipment vendors, the configuration becomes difficult. Therefore, in the absence of the Xn interface configuration, the second handover method can be used for the handover.

To address the aforementioned issues, this embodiment proposes the following method.

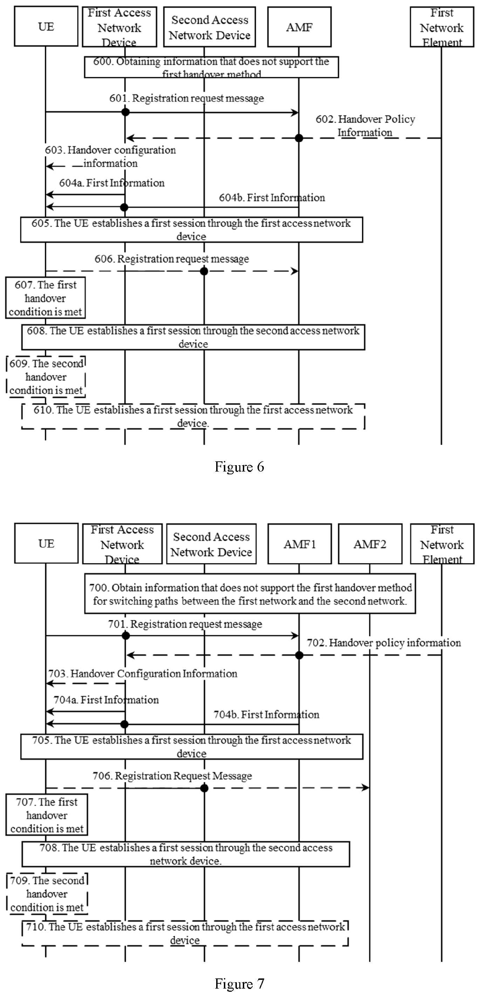

As shown in Figure 6, a method 600 applicable to this application is introduced. This method can be applied to the application scenario 1 described in Figure 2. Through method 600, the network indicates to the UE that it is allowed to perform a path switch for a path switch, so that the UE initiates a path switch, thereby ensuring that the Handover procedure and the path switch Path Switch work together without conflict. This method includes the following steps:
Step 600: The access network device and/or the AMF obtain information indicating that the first handover mode is not supported.

In a possible implementation, the network management operation, administration, and maintenance (OAM) configure information indicating that the first handover mode is not supported for the access network device and/or the AMF. The reason why the first handover mode is not supported may be, for example, handover not supported. The access network device includes a first access network device and a second access network device. The first handover mode is a handover mode initiated by a radio access network device (for example, handover). For example, a reason why the first handover mode is not supported may be that no Xn interface configuration is available.

In another possible implementation, the access network device and/or the AMF locally configure information indicating that the first handover mode is not supported.

In a possible implementation, the information indicating that the first handover mode is not supported is information indicating that switching between the first RAT and the second RAT is not supported through the first handover mode. The first RAT and the second RAT may refer to any two RATs, for example, between TN and NTN, or between 5G and 6G.

In a possible implementation, the access network device and/or the AMF obtain information that allows the UE to switch a path in a second handover manner. Alternatively, the information indicating that the first handover manner is not supported may indicate that the UE is allowed to switch the path between the first RAT and the second RAT in the second handover manner. The second handover manner is a handover manner initiated by the UE (for example, a path switch).

In this embodiment, an example in which a RAT type of the first access network device is a TN, and a RAT type of the second access network device is an NTN is used for description.

For example, the OAM configures, for the first access network device and/or the AMF, "not supporting TN/NTN handover (TN/NTN handover not supported)" or "supporting UE to switch a path between the TN and the NTN (TN/NTN path switch supported)").

Step 601: UE sends a registration request message to an AMF through a first access network device.

The registration request message is used by the UE to register with the network through a connection between the first access network device and the AMF. Correspondingly, the AMF is responsible for the registration management of the UE.

It should be understood that the UE accesses the network through the first path, and the first path includes the first access network device and the AMF.

It should be noted that the first path may further include a UPF. In this embodiment, the first path may refer to a user plane path from the UE to the UPF through the first access network device.

Optionally, the registration request message includes capability information indicating that the UE supports switching a path in a second handover manner. For example, the capability information is path switch support.

Step 602 (optional): The first network element sends handover policy information to the first access network device.

In a possible implementation, the handover policy information indicates that the UE is allowed to switch a path between the first RAT and the second RAT by using the second handover mode. For example, the handover policy information is a path switch policy (path switch policy).

In a possible implementation, the first network element may be a PCF or a UDM. The PCF/UDM sends handover policy information to the first access network device through the AMF. For example, the PCF/UDM sends handover policy information to the AMF, and the AMF sends the handover policy information to the first access network device.

In a possible implementation, when the first network element determines, based on subscription data of the UE, that the UE is allowed to switch a path between the first RAT and the second RAT by using the second handover mode, the first network element sends handover policy information to the first access network device.

In a possible implementation, the handover policy information includes indication information that allows the UE to switch a path between the first RAT and the second RAT by using the second handover mode. It can be understood that the indication information may trigger the first access network device to send handover configuration information to the UE.

In a possible implementation, the handover policy information includes that the network allows the UE to initiate a path switch. For example, the UE can initiate a path switch between the TN RAT and the NTN RAT. Alternatively, the UE can initiate a path switch between the TN frequency and the NTN frequency. In this case, the UE does not need to sense the RAT type, but only needs to sense the corresponding frequency, and perform measurement and cell access on the frequency.

In a possible implementation, the handover policy information includes a preferentially accessed RAT. For example, the TN RAT is used for primary access, and the NTN RAT is used for secondary access, so that the UE preferentially accesses a TN cell. Alternatively, the 6G RAT is used for primary access, and the 5G RAT is used for secondary access, so that the UE preferentially accesses a 6G cell.

Step 603 (optional): The first access network device sends handover configuration information to the UE.

The handover configuration information is used by the UE to switch a path in a second handover manner. For example, the handover configuration information is a path switch configuration (path switch configuration)).

In a possible implementation, the first access network device determines the handover configuration information based on the handover policy information. Alternatively, the first access network device determines the handover configuration information based on the information obtained in step 600.

In a possible implementation, the first access network device sends the handover configuration information by means of broadcast. It may be understood that, in this case, the first access network device does not need to receive the handover policy information based on step 602, but determines the handover configuration information based on the information obtained in step 600.

In another possible implementation, the first access network device sends the handover configuration information to the UE in unicast mode.

In a possible implementation, the handover configuration information includes a first handover condition, and optionally, further includes a first threshold. The first switching condition is that a path is switched when signal quality between the UE and the access network device is lower than a first threshold. For example, the access network device may be an access network device of a first RAT type, and a value of the set first threshold may be lower than a threshold for switching a path from the first RAT type to the first RAT type, for example, a TN-to-TN switching threshold, so as to avoid a sending conflict between the TN-to-TN switching and the TN-to-NTN switching. That is, the threshold for switching from TN to NTN is lower than the threshold for switching from TN to TN, so that a priority of switching from TN to TN is higher.

In another possible implementation, the handover configuration information includes a first handover condition and a second handover condition. Optionally, it further includes a first threshold and a second threshold. The second handover condition is that when the signal quality between the UE and the access network device of the first RAT type is higher than the second threshold, the UE switches back to the path corresponding to the access network device of the first RAT type. For example, when the UE transmits a session through the access network device corresponding to the second RAT type, and when the signal quality between the UE and the first access network device is higher than the second threshold, the UE switches back to the path corresponding to the first access network device. That is, the session is switched to the path corresponding to the first access network device for transmission. For example, the second RAT type is NTN, and the value of the second threshold set may be lower than the threshold for switching between the paths corresponding to the second RAT type and the second RAT type. For example, the threshold for switching between the paths corresponding to NTN and NTN, so as to avoid conflicts between the NTN-to-NTN handover and the NTN-to-TN handover. That is, the threshold for the NTN-to-TN handover is lower than the threshold for the NTN-to-NTN handover, so that the priority of the NTN-to-TN handover is higher.

In a possible implementation, the signal quality may be reference signal received quality (Reference Signal Received Quality, RSRQ)) or reference signal received power (Reference Signal Received Power, RSRP)), etc.

Step 604: The UE receives the first information from the network.

The first information indicates that the network does not support the first handover mode, or indicates that the UE is allowed to switch paths through the second handover mode.

In a possible implementation, the information indicating that the first handover mode is not supported is information indicating that switching between the first RAT and the second RAT through the first handover mode is not supported. For example, switching between a TN and an NTN (for example, TN/NTN handover not supported)). Alternatively, the information indicating that the UE is allowed to switch paths through the second handover mode is information indicating that the UE is allowed to switch paths through the second handover mode between the first RAT and the second RAT.

In one possible implementation, the granularity of the area corresponding to the first information may be a cell (Cell) / tracking area (TA) / network (PLMN) granularity. In other words, the first information is valid in the area corresponding to the area granularity. The UE is allowed to switch paths through the second handover method within this area.

In one possible implementation, the UE receives the first information through step 604a, that is, the UE receives the first information from the first access network device. For example, the first access network device sends the first information to the UE through an RRC message. The RRC message may be an RRC configuration message or an RRC reconfiguration message.

In another possible implementation, the UE receives the first information through step 604b, that is, the UE receives the first information from the AMF. For example, the AMF sends the first information to the UE through a NAS message. The NAS message may be a registration accept message. Optionally, in the case of step 602, where the AMF receives the handover policy information from the first network element (the handover policy information indicates that the UE is allowed to switch paths through the second handover method)), the AMF sends the first information to the UE. Optionally, in the case of the registration request message including the capability information of the UE supporting switching paths through the second handover method), the AMF sends the first information to the UE.

In another possible implementation, the UE receives the first information through another path that is different from the first path. It can be understood that, at this time, the UE is also registered with the network through another path.

Step 605: The UE establishes a first session through the first access network device.

It can be understood that the UE transmits data of the first session through the first path of the first access network device.

Step 606 (optional): The UE sends a registration request message to the AMF through the second access network device.

In a possible implementation, the first information triggers the UE to register with the network through the second path. For example, the UE registers with the network through the second access network device (NTN RAT), thereby reducing the time required to establish the second path. It should be noted that, at this time, the UE has been registered with the network in advance through the second access network device, and does not send data through the second access network device.

Step 607: The UE determines that the first handover condition is met.

The first handover condition is that the signal quality between the UE and the first access network device is lower than the first threshold. For example, when the TN signal quality between the UE and the first access network device is lower than the first threshold, the UE considers that the TN path is unavailable and thus switches to the second path. When the TN signal is higher than the first threshold, the UE considers that the TN path is available.

In a possible implementation, the UE locally configures the value of the first threshold. In this case, the handover configuration information received by the UE in step 603 may not include the first threshold.

Optionally, the UE further determines that the signal quality between the UE and the second access network device is higher than a third threshold. The value of the third threshold may be locally configured by the UE or received from the network.

Step 608: The UE establishes a first session through the second access network device.

When the first handover condition is met, the UE switches the first path to the second path through the second handover method. That is, the UE sends a session establishment request message or a session modification request message through the second path. The session establishment request message or the session modification request message includes a handover indication and an identifier of the first session. The handover indication is used to indicate that the first session transmitted on the first path is to be switched to the second path for transmission. Alternatively, the UE sends a first request through the second path, where the first request is used to request switching the session transmitted on the first path to the second path for transmission. For example, the session is a PDU session.

For example, the UE determines, based on "TN/NTN handover not supported", to access a cell corresponding to the NTN (a cell corresponding to a frequency point of the NTN)). The UE sends a request for switching the session to the second path through the RAN2 corresponding to the cell. For example, the session is a PDU session.

Step 609 (optional): The UE determines that the second handover condition is met.

The second handover condition is that the signal quality between the UE and the first access network device is higher than the second threshold.

In a possible implementation, the UE locally configures the value of the second threshold. In this case, the handover configuration information received by the UE in step 603 may not include the second threshold.

Step 610 (optional): The UE establishes a first session through the first access network device.

When the second handover condition is met, the UE switches the second path to the first path in the second handover manner. That is, the UE sends, through the first path, a session establishment request message or a session modification request message. The session establishment request message or the session modification request message includes a handover indication and an identifier of the first session. The handover indication is used to indicate to switch the first session transmitted on the second path to the first path for transmission. Alternatively, the UE sends a first request through the first path, where the first request is used to request to switch a session transmitted on the second path to the first path for transmission. For example, the session is a PDU session.

For example, the UE actively selects, according to "TN/NTN handover not supported", a cell corresponding to the TN (a cell at a frequency corresponding to the TN) to access, and sends a handover request for the session by using the RAN1 corresponding to the cell.

It should be noted that, in this embodiment, the UE may initially access the cell corresponding to the NTN (For example, no TN NR signal is available during initial access.) That is, steps 605 to 607 may be skipped, and a session is established by using the RAN2 (NTN). Subsequently, when the second handover condition in step 609 is met, the UE performs step 610 again (For example, it is detected that the TN NR signal quality is higher than the second threshold). That is, in the case that the UE first accesses the cell corresponding to the NTN, steps 600 to 604 and steps 608 to 610 may be performed in this embodiment.

In the method 600, the network sends, to the UE by using the network, the information about switching a path in the second handover mode, so that the network controls the path switching by the UE, so that after the UE receives the information about switching a path in the second handover mode, when the first switching condition is met, A path is switched in the second handover mode, so as to avoid a conflict between different switching procedures. Further, a RAT with a higher priority is sent to the UE by using a network, so that the UE transmits data on a path corresponding to the RAT with a higher priority as much as possible, thereby ensuring better communication experience of a user.

As shown in FIG. 7, a method 700 applicable to this application is described. This method may be applicable to the application scenario 2 described in FIG. 3. By using method 700, the network indicates to the UE that the UE is allowed to perform path switching between different PLMNs through path switch, so that the UE initiates path switching across PLMNs, thereby ensuring that the handover procedure and the path switching Path Switch work together without conflicts. The method includes the following steps:
Step 700: The access network device and/or the AMF obtain information indicating that the first handover mode is not supported for switching a path between the first network and the second network.

In a possible implementation, the network management OAM configures, for the access network device and/or the AMF, information indicating that the first handover mode is not supported for switching between different PLMNs (for example, the first handover mode is not supported for switching between different PLMNs (Inter-PLMN handover not supported))). The access network device includes a first access network device and a second access network device, and the AMF includes an AMF1 and an AMF2. The first handover mode is a handover mode initiated by a radio access network device (for example, handover). It can be understood that the first access network device corresponds to the first network, and the second access network device corresponds to the second network. Alternatively, the first access network device belongs to the first network, and the second access network device belongs to the second network. Alternatively, the first access network device provides access to the first network for the UE, and the second access network device provides access to the second network for the UE.

In another possible implementation, the access network device and/or the AMF are locally configured not to support information about switching between different PLMNs using the first handover mode.

In a possible implementation, the access network device and/or the AMF obtain information that allows the UE to switch paths between the first network and the second network using the second handover mode. Alternatively, the information that does not support switching between different PLMNs using the first handover mode may indicate that the UE is allowed to switch paths between the first network and the second network using the second handover mode. For example, it indicates that the UE is allowed to switch paths between different PLMNs using the second handover mode. The second handover mode is a handover mode initiated by the UE (for example, a path switch).

In this embodiment, it is assumed as an example for description that the first access network device and the AMF1 belong to the PLMN1, the second access network device and the AMF2 belong to the PLMN2, the PLMN1 is a home public land mobile network (home public land mobile network, HPLMN)) of the UE, and the PLMN2 is a visited public land mobile network (visited public land mobile network, VPLMN)) of the UE. This is used as an example for description.

Step 701: The UE sends a registration request message to AMF1 through the first access network device.

The registration request message is used for the UE to register with the network by connecting to the first access network device and AMF1. Accordingly, the AMF1 is responsible for managing the registration of the UE.

It should be understood that the UE accesses the network through a first path, and the first path includes a first access network device and AMF1.

Optionally, the registration request message includes capability information indicating that the UE supports switching a path in a second handover mode. For example, the capability information indicates that the UE supports path switching (path switch support). Alternatively, the capability information indicates that the UE supports switching a path between different PLMNs in the second handover mode.

Step 702 (optional): The first network element sends handover policy information to the first access network device.

The handover policy information indicates that the UE is allowed to switch a path between different PLMNs in the second handover manner. For example, the switching policy information is a path switch policy (path switch policy).

In a possible implementation, the first network element may be a PCF or a UDM. The PCF/UDM sends the handover policy information to the first access network device by using the AMF 1. For example, the PCF/UDM sends the handover policy information to the AMF 1, and the AMF 1 sends the handover policy information to the first access network device.

In a possible implementation, the first network element sends the handover policy information to the first access network device when determining, based on the subscription data of the UE, that the UE is allowed to switch a path between different PLMNs in the second handover manner.

In a possible implementation, the handover policy information includes indication information indicating that the UE is allowed to switch a path between the PLMN 1 and the PLMN 2 in the second handover manner. It may be understood that the indication information may trigger the first access network device to send the handover configuration information to the UE.

In a possible implementation, the handover policy information includes a PLMN to be preferentially accessed. For example, PLMN1 is a primary access, and PLMN2 is a secondary access, so that the UE preferentially accesses a cell of the PLMN1.

Step 703 (optional): The first access network device sends handover configuration information to the UE.

The handover configuration information is used by the UE to switch a path between different PLMNs in a second handover manner. For example, the handover configuration information is a path switch configuration (path switch configuration).

In a possible implementation, the first access network device determines the handover configuration information based on the handover policy information. Alternatively, the first access network device determines the handover configuration information based on the information obtained in step 700.

In a possible implementation, the first access network device sends the handover configuration information through broadcasting. It can be understood that, in this case, the first access network device does not need to receive the handover policy information according to step 702, and determine the handover configuration information based on the information obtained in step 700.

In another possible implementation, the first access network device sends the handover configuration information to the UE in unicast mode.

In a possible implementation, the handover configuration information includes a first handover condition, and optionally, further includes a first threshold. The first switching condition is switching a path when signal quality between the UE and the access network device is lower than a first threshold. For example, the access network device may be an access network device of the PLMN 1, and a value of the set first threshold may be less than a threshold for switching a path from the PLMN 1 to the PLMN 1, so as to avoid a sending conflict between a PLMN 1 to a PLMN 1 handover and a PLMN 1 to a PLMN 2 handover. That is, the threshold for a handover from the PLMN 1 to the PLMN 2 is lower than the threshold for a handover from the PLMN 1 to the PLMN 1, so that a priority of a handover from the PLMN 1 to a different cell in the PLMN 1 is higher.

In another possible implementation, the handover configuration information includes a first handover condition and a second handover condition, and optionally, further includes a first threshold and a second threshold. The second handover condition is that when signal quality between the UE and the access network device in the PLMN 1 is higher than a second threshold, the UE is handed over back to the path corresponding to the access network device in the PLMN 1. For example, when the UE transmits the session by using the access network device corresponding to the PLMN2, when signal quality between the UE and the first access network device is higher than the second threshold, the UE switches back to the path corresponding to the first access network device, that is, the session is switched to the path corresponding to the first access network device for transmission. For example, the value of the set second threshold may be lower than the threshold for switching a path between different cells in the PLMN 2 to the PLMN 2, so as to avoid a sending conflict between the PLMN 2 to the PLMN 2 handover and the PLMN 2 to the PLMN 1 handover. That is, the threshold for handover from the PLMN2 to the PLMN1 is lower than the threshold for handover from the PLMN2 to the PLMN2, so that a priority of handover from the PLMN2 to the PLMN1 is higher.

In a possible implementation, the signal quality may be RSRQ, RSRP, or the like.

Step 704: The UE receives the first information from the network.

The first information indicates that the network does not support switching paths between different PLMNs in the first handover mode, or it indicates that the UE is allowed to switch paths between different PLMNs in the second handover mode.

In a possible implementation, the information indicating that the first handover mode is not supported for switching paths between different PLMNs may be information indicating that the first handover mode is not supported for switching paths between PLMN1 and PLMN2. For example, the network may support switching paths between PLMN1 and PLMN3 in the first handover mode, or the network may support switching paths between PLMN2 and PLMN3 in the first handover mode, but the network does not support switching paths between PLMN1 and PLMN2 in the first handover mode.

In a possible implementation, the first information may be valid in an area corresponding to the area granularity of the first information. The UE is allowed to switch paths between different PLMNs in the second handover mode within this area.

In one possible implementation, the UE receives the first information through step 704a, that is, the UE receives the first information from the first access network device. For example, the first access network device sends the first information to the UE through an RRC message. The RRC message may be an RRC configuration message or an RRC reconfiguration message.

In another possible implementation, the UE receives the first information through step 704b, that is, the UE receives the first information from AMF1. For example, AMF1 sends the first information to the UE through a NAS message. The NAS message may be a registration accept message. Optionally, in step 702, the AMF receives the handover policy information from the first network element (the handover policy information indicates that the UE is allowed to switch paths between different PLMNs through the second handover mode), in this case, the AMF sends the first information to the UE. Optionally, in the case that the registration request message includes the capability information indicating that the UE supports switching paths through the second handover mode, the AMF sends the first information to the UE.

In another possible implementation, the UE receives the first information through another path that is different from the first path. It can be understood that, at this time, the UE is also registered with the network through another path.

Step 705: The UE establishes a first session through the first access network device.

It can be understood that the UE transmits data of the first session through the first path of the first access network device.

It should be noted that the first path may further include a UPF. In this embodiment, the first path may refer to a user plane path from the UE to the UPF through the first access network device.

Step 706 (optional): The UE sends a registration request message to the AMF 2 through the second access network device.

In a possible implementation, the first information triggers the UE to register with the network through the second path. For example, the UE registers with PLMN2 through the second access network device (located in PLMN2)), thereby reducing the time required to establish the second path. It should be noted that, in this case, the UE has been registered with PLMN2 through the second access network device in advance, and does not send data through the second access network device.

Step 707: The UE determines that the first handover condition is met.

The first handover condition is that the signal quality between the UE and the first access network device is lower than the first threshold. For example, when the PLMN signal quality between the UE and the first access network device is lower than the first threshold, the UE considers that the PLMN path is unavailable, and therefore switches to the second path. When the PLMN signal is higher than the first threshold, the UE considers that the PLMN path is available.

In a possible implementation, the UE locally configures the value of the first threshold. In this case, the first threshold may not be included in the handover configuration information received by the UE in step 703.

Optionally, the UE further determines that the signal quality between the UE and the second access network device is higher than a third threshold. The value of the third threshold may be locally configured by the UE or received from the network.

Step 708: The UE establishes a first session through the second access network device.

When the first handover condition is met, the UE switches the first path to the second path in the second handover manner. That is, the UE sends a session establishment request message or a session modification request message through the second path. The session establishment request message or the session modification request message includes a handover indication and an identifier of the first session. The handover indication is used to indicate that the first session transmitted on the first path is switched to the second path for transmission. Alternatively, the UE sends, through the second path, a first request, where the first request is used to request to switch a session transmitted on the first path to the second path for transmission. For example, the session is a PDU session.

For example, the UE, based on "Inter-PLMN handover not supported", actively selects to access a cell corresponding to the PLMN2 (a cell corresponding to a frequency of the PLMN2), and sends a request for switching a session through the cell corresponding to the RAN2. The request for switching the session includes a handover indication and an identifier of the first session. The handover indication is used to indicate that the first session transmitted on the first path is switched to the second path for transmission. Alternatively, the UE sends, through the second path, a first request, where the first request is used to request to switch a session transmitted on the first path to the second path for transmission. For example, the session is a PDU session.

Step 709 (optional): The UE determines that the second handover condition is met.

The second handover condition is that the signal quality between the UE and the first access network device is higher than a second threshold.

In a possible implementation, the UE locally configures a value of the second threshold. In this case, the handover configuration information received by the UE in step 703 may not include the second threshold.

Step 710 (optional): The UE establishes a first session by using the first access network device.

When the second handover condition is met, the UE switches the second path to the first path in the second handover manner. That is, the UE sends, by using the first path, a session establishment request message or a session modification request message, where the session establishment request message or the session modification request message includes a handover indication and an identifier of the first session. The handover indication is used to indicate to switch the first session transmitted on the second path to the first path for transmission. Alternatively, the UE sends, by using the first path, a first request, where the first request is used to request to switch the session transmitted on the second path to the first path for transmission. For example, the session is a PDU session.

For example, the UE actively selects, according to "Inter-PLMN handover not supported", a cell (a cell of a frequency channel number corresponding to the PLMN 1) corresponding to the PLMN 1, and sends, by using the RAN 1 corresponding to the cell, a handover request session.

It should be noted that, in this embodiment, the UE may initially access the cell corresponding to the PLMN2 (For example, there is no signal in PLMN 1 during initial access.) In other words, steps 705 to 707 may be skipped, and the session is established by using the RAN 2 (located in the PLMN 2). Subsequently, when the second handover condition in step 709 is met, the UE performs step 710 again (For example, it is detected that the signal quality of the PLMN 1 is higher than the second threshold). That is, in a case in which the UE first accesses the cell corresponding to the PLMN2, steps 700 to 704 and steps 708 to 710 may be performed in this embodiment.

In the method 700, information about switching a path between a PLMN 1 and a PLMN 2 in a second handover manner is sent to the UE by using a network, so that the network controls the path switching by the UE, so that after the UE receives the information about switching a path in the second handover manner, When the first handover condition is met, the path is switched in the second handover manner, so as to avoid a conflict between different handover procedures. Further, a PLMN with a higher priority is sent to the UE by using a network, so that the UE transmits data on a path corresponding to the PLMN with a higher priority as much as possible, thereby ensuring better communication experience of a user.

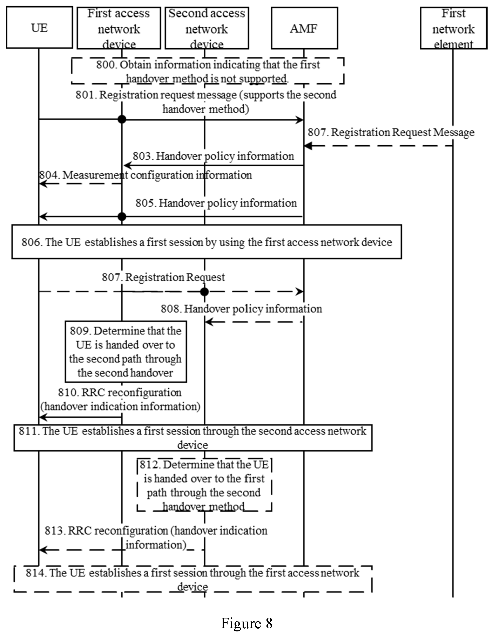

As shown in FIG. 8, a method 800 applicable to this application is described. This method may be applicable to the application scenario 1 described in FIG. 2. By using the method 800, the access network device indicates, based on information that the UE allows path switching to perform path switching, the UE to initiate path switching, thereby ensuring that the handover procedure and the path switching Path Switch are coordinated and do not conflict. The method includes the following steps:
Step 800 (optional): The access network device and/or the AMF obtain information indicating that the first handover mode is not supported.

For related descriptions, refer to the related descriptions of step 600 in FIG. 6. Details are not described herein again.

In this embodiment, an example in which a RAT type of the first access network device is a TN, and a RAT type of the second access network device is an NTN is used for description.

Step 801: The UE sends a registration request message to the AMF by using the first access network device.

The registration request message includes capability information indicating that the UE supports switching paths through a second handover method. For example, it supports path switching (path switch support).

Step 802 (optional): The first network element sends handover policy information to the AMF.

The handover policy information indicates that the UE is allowed to switch paths through a second handover method. For example, the handover policy information is a path switch policy (path switch policy).

In a possible implementation, the first network element may be a PCF or a UDM. The PCF/UDM sends handover policy information to the AMF.

In a possible implementation, the first network element determines, based on subscription data of the UE, that the UE is allowed to switch paths through a second handover method, and sends handover policy information to the AMF.

In another possible implementation, the AMF sends a request message to the first network element based on the capability information of the UE supporting path switching between the first RAT and the second RAT through the second handover method. The request message is used to request handover policy information. In response to the request message, the first network element sends the handover policy information to the AMF. Alternatively, the AMF sends a request message to the first network element. The request message is used to request policy information, and the request message includes the capability information of the UE supporting path switching between the first RAT and the second RAT through the second handover method. In response to the request message, the first network element sends the handover policy information to the AMF.

In one possible implementation, the handover policy information includes indication information that allows the UE to switch paths between the first RAT and the second RAT through the second handover method. It can be understood that the indication information may trigger the AMF to send the handover policy information to the first access network device.

In one possible implementation, the handover policy information includes a preferred RAT for access. For example, the TN RAT is the primary access, and the NTN RAT is the secondary access, so that the UE can preferentially access the TN cell. Alternatively, the 6G RAT is the primary access, and the 5G RAT is the secondary access, so that the UE can preferentially access the 6G cell.

Step 803: The AMF sends handover policy information to the first access network device.

In one possible implementation, the AMF sends handover policy information to the first access network device based on the handover policy information received from the first network element.

In another possible implementation, the AMF sends handover policy information to the first access network device based on the information obtained in step 800, which indicates that the first handover mode is not supported.

In another possible implementation, the AMF sends handover policy information to the first access network device based on the capability information of the UE supporting path switching through the second handover mode, which is sent by the UE in step 801.

Step 804 (optional): The first access network device sends measurement configuration information to the UE.

In a possible implementation, the measurement configuration information includes a frequency signal of the cell measured by the UE. For example, the frequency corresponding to the NTN.

Step 805: The AMF sends handover policy information to the UE through the first access network device.

In a possible implementation, the AMF sends the handover policy information to the UE through a NAS message.

For a related description of the handover policy information, refer to step 602 in FIG. 6. Details are not described herein again.

Step 806: The UE establishes a first session through the first access network device.

It can be understood that the UE transmits data of the first session through the first path of the first access network device.

It should be noted that the first path may further include a UPF. In this embodiment, the first path may refer to a user plane path from the UE to the UPF through the first access network device.

Step 807 (optional): The UE sends a registration request message to the AMF through the second access network device.

In a possible implementation, the handover policy information triggers the UE to register with a network through the second path. For example, the UE registers with the network through the second access network device (NTN RAT), thereby reducing the time required to establish the second path. It should be noted that in this case, the UE has registered with the network in advance and does not send data.

Step 808 (optional): The AMF sends the handover policy information to the second access network device.

For the relevant description of the handover policy information, refer to step 602 in FIG. 6. Details are not described herein again.

Step 809: The first access network device determines that the UE is handed over to the second path through the second handover manner.

In a possible implementation, the first access network device determines, based on the handover policy information, to switch the first path of the UE to the second path.

In a possible implementation, the first access network device determines, based on the signal quality between the UE and the first access network device being lower than a first threshold, to switch the first path of the UE to the second path. For example, when the signal quality of the TN between the UE and the first access network device is lower than the first threshold, the first access network device considers that the TN path is unavailable, and therefore switches the UE to the second path. When the signal quality of the TN is higher than the first threshold, the first access network device considers that the TN path is available.

In a possible implementation, the UE reports a measurement report to the first access network device based on the received measurement configuration information, where the measurement report includes a cell ID and a corresponding signal measurement value. For example, when the UE is within the coverage of a satellite, the measurement report includes the cell ID corresponding to the NTN and the signal measurement value corresponding to the cell ID.

In one possible implementation, the first access network device determines, based on the signal quality between the UE and the second access network device being higher than the second threshold, that
In another possible implementation, the first access network device preferentially determines whether a cell corresponding to a TN that can be handed over exists. If yes, a cell corresponding to the TN is preferentially handed over, that is, a path is switched in a first handover manner. If no, it is determined to hand over to the cell corresponding to the NTN, that is, hand over the path in the second handover manner.

In a possible implementation, when the first access network device determines that there is no cell corresponding to the TN that can be handed over, (For example, the signal measurement value between the UE and the first access network device is less than the first threshold, and the measurement report of the UE is empty, or no measurement report of the UE is received within a specific period.) or the signal measurement values in the measurement report are all lower than the threshold, which may indicate that there is no suitable TN corresponding cell for handover), that is, the path cannot be switched in the first handover mode, and a message is sent to the UE that allows the path to be switched in the second handover mode. For example, path switch allowed. It should be noted that the first access network device may skip step 804, that is, the first access network device does not need to know the signal measurement value of the cell corresponding to the NTN measured by the UE.

Step 810: The first access network device sends handover indication information to the UE.

For example, the first access network device sends an RRC reconfiguration message to the UE, and the RRC reconfiguration message includes the handover indication information. The handover indication information is used by the UE to switch a path to a second path through a second handover manner. For example, the handover indication information may be a path switch indication (path switch indication).

Optionally, the first access network device further sends a cell ID corresponding to the NTN to the UE. The second radio access network device corresponding to the cell ID is on the second path.

Optionally, the RRC reconfiguration message further includes the RAT type corresponding to the NTN.

Step 811: The UE establishes a first session through the second access network device.

The UE, based on the handover indication information and the Cell ID corresponding to the NTN, switches the first path to the second path through the second handover method. That is, the UE sends a session establishment request message or a session modification request message through the second radio access network device corresponding to the Cell ID. The session establishment request message or the session modification request message includes the handover indication and the identifier of the first session. The handover indication is used to indicate that the first session transmitted on the first path is to be switched to the second path for transmission. Alternatively, the UE sends the first request through the second path, where the first request is used to request to switch the session transmitted on the first path to the second path for transmission. For example, the session is a PDU session.

Optionally, if the first access network device does not send the Cell ID corresponding to the NTN to the UE, the UE may search for the Cell ID corresponding to the NTN, and establish the first session through the second access network device corresponding to the Cell ID.

It can be understood that, after step 811 is performed, the UE is connected to a network and session data is transmitted through the second access network device.

Step 812 (optional): The second access network device determines that the UE is handed over to the first path through the second handover mode.

In a possible implementation, the second access network device determines, based on the handover policy information, to switch the second path of the UE to the first path.

In a possible implementation, the second access network device determines, based on the signal quality between the UE and the first access network device being higher than a second threshold, to switch the second path of the UE to the first path. For example, when the signal quality of the TN between the UE and the first access network device is higher than the second threshold, the second access network device considers that the TN path is available, and therefore switches the UE to the first path.

In a possible implementation, the UE locally configures a value of the second threshold.

In a possible implementation, the UE reports a measurement report to the second access network device, where the measurement report includes a signal measurement value corresponding to the first access network device. For example, when the UE is within the coverage of the first access network device, the measurement report includes a signal measurement value between the UE and the first access network device.

Step 813 (optional): The second access network device sends an RRC reconfiguration message to the UE.

The RRC reconfiguration message includes handover indication information. The handover indication information is used by the UE to switch the path from the second path to the first path through the second handover manner. For example, the handover indication information may be a path switch indication (path switch indication).

Optionally, the RRC reconfiguration message further includes a cell ID corresponding to the TN, and the first access network device corresponding to the cell ID is on the first path.

Step 814 (optional): The UE establishes a first session by using the first access network device.

The UE switches the second path to the first path through the second handover manner based on the handover indication information and the cell ID corresponding to the TN. That is, the UE sends a session establishment request message or a session modification request message by using the first access network device corresponding to the cell ID. The session establishment request message or the session modification request message includes the handover indication information and an identifier of the first session, where the handover indication information is used to indicate to switch the first session transmitted on the second path to the first path for transmission. Alternatively, the UE sends a first request through the first path, where the first request is used to request to switch a session transmitted on the second path to the first path for transmission. For example, the session is a PDU session.

It should be noted that, in this embodiment, the UE may initially access the cell corresponding to the NTN (For example, no TN NR signal is available during initial access.) In other words, steps 806 to 810 may be skipped, and a session may be established by using the RAN2 (NTN). Subsequently, when the second handover condition in step 812 is met, the second radio access network device performs step 813 again (For example, it is detected that the TN NR signal quality is higher than the second threshold). That is, in the case that the UE first accesses the cell corresponding to the NTN, steps 800 to 805 and steps 811 to 814 may be performed in this embodiment.

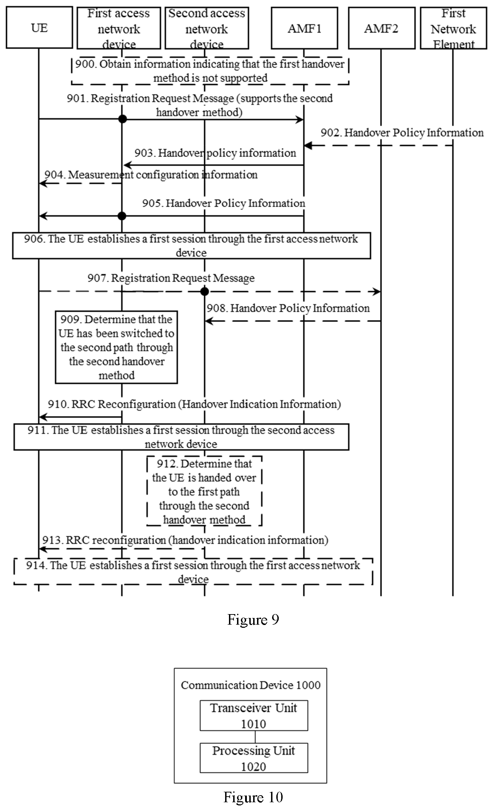

In the method 800, the access network device receives policy information that allows the UE to switch a path in the second handover mode, and sends, to the UE, switching indication information that instructs the UE to switch a path in the second handover mode, so as to implement control by the network on the path switching by the UE. In this way, conflicts between different handover procedures are avoided. As shown in FIG. 9, a method 900 applicable to this application is described. This manner may be applicable to the application scenario 2 described in FIG. 3. According to the method 900, the access network device instructs, according to the path switch allowed by the UE to perform path switch between different PLMNs by using the Path Switch, the UE to initiate a cross-PLMN path switch, so as to ensure that coordination between a handover procedure and a path switch Path Switch does not conflict. The method includes the following steps:
Step 900 (optional): The access network device and/or the AMF obtain information that does not support switching a path between a first network and a second network in the first handover manner.

For related descriptions, refer to the related descriptions of step 700 in Figure 7. Details are not described herein again.

In this embodiment, it is assumed as an example that the first access network device and the AMF1 belong to a PLMN1, the second access network device and the AMF2 belong to a PLMN2, the PLMN1 is an HPLMN of the UE, and the PLMN2 is a VPLMN of the UE.

Step 901: The UE sends a registration request message to the AMF1 by using the first access network device.

The registration request message is used by the UE to register with a network by using a first path that connects the first access network device and the AMF1.

The registration request message includes capability information indicating that the UE supports switching paths through a second handover method. For example, it supports path switching (path switch support). Alternatively, it supports switching paths between different PLMNs through the second handover method.

Step 902 (optional): The first network element sends handover policy information to AMF1.

The handover policy information indicates that the UE is allowed to switch paths between different PLMNs through the second handover method. For example, the handover policy information is a path switch policy (path switch policy).

In a possible implementation, the first network element may be a PCF or a UDM. The PCF/UDM sends handover policy information to the AMF.

In a possible implementation, when the first network element determines, based on subscription data of the UE, that the UE is allowed to switch paths between different PLMNs through the second handover method, the first network element sends handover policy information to AMF1.

In another possible implementation, AMF1 sends a request message to the first network element based on the capability information of the UE supporting path switching between PLMN1 and PLMN2 through the second handover method. The request message is used to request handover policy information. In response to the request message, the first network element sends the handover policy information to AMF1. Alternatively, the AMF sends a request message to the first network element. The request message is used to request policy information, and the request message includes the capability information of the UE supporting path switching between PLMN1 and PLMN2 through the second handover method. In response to the request message, the first network element sends the handover policy information to the AMF.

In one possible implementation, the handover policy information includes indication information for allowing the UE to switch paths between PLMN1 and PLMN2 through the second handover method. It can be understood that the indication information may trigger AMF1 to send the handover policy information to the first access network device.

In one possible implementation, the handover policy information includes a PLMN that is preferentially accessed. For example, PLMN1 is a primary access, and PLMN2 is a secondary access, so that the UE preferentially accesses a cell of the PLMN1.

Step 903: AMF1 sends handover policy information to the first access network device.

In one possible implementation, AMF1 sends handover policy information to the first access network device based on the handover policy information received from the first network element.

In another possible implementation, the AMF sends handover policy information to the first access network device based on the information indicating that the first handover mode is not supported, which is obtained in step 900.

In another possible implementation, the AMF sends handover policy information to the first access network device based on the capability information of the UE supporting switching paths through the second handover mode, which is sent by the UE in step 901.

In another possible implementation, step 904 is as follows: The first access network device sends measurement configuration information to the UE.

In a possible implementation, the measurement configuration information includes a frequency signal of the cell measured by the UE. For example, the frequency corresponding to the cell of the PLMN2.

Step 905: AMF1 sends handover policy information to the UE through the first access network device.

In a possible implementation, AMF1 sends the handover policy information to the UE through a NAS message.

For a related description of the handover policy information, refer to step 702 in FIG. 7. Details are not described herein again.

Step 906: The UE establishes a first session through the first access network device.

It can be understood that the UE transmits data of the first session through the first path from the AMF1 by using the first access network device.

It should be noted that the first path may further include a UPF. The first path in this embodiment may refer to a user plane path from the UE to the UPF by using the first access network device.

Step 907 (optional): The UE sends a registration request message to the AMF2 by using the second access network device.

In a possible implementation, the handover policy information triggers the UE to register with a network by using the second path. For example, the UE registers with the PLMN2 by using the second access network device (located in the PLMN2)), so as to reduce time for establishing the second path. It should be noted that, in this case, the UE registers with the PLMN2 in advance, and does not send data.

Step 908 (optional): AMF2 sends handover policy information to the second access network device by using the second access network device.

For the related description of the handover policy information, refer to step 702 in FIG. 7. Details are not described herein again.

Step 909: The first access network device determines that the UE is handed over to the second path in the second handover manner.

In a possible implementation, the first access network device determines, based on the handover policy information, to switch the first path of the UE to the second path.

In a possible implementation, the first access network device determines, based on the signal quality between the UE and the first access network device being lower than a first threshold, to switch the first path of the UE to the second path. For example, when the signal quality of PLMN1 between the UE and the first access network device is lower than the first threshold, the first access network device considers that the PLMN1 path is unavailable, and therefore switches the UE to the second path. When the signal quality of PLMN1 is higher than the first threshold, the first access network device considers that the PLMN1 path is available.

In a possible implementation, the UE reports a measurement report to the first access network device based on the received measurement configuration information. The measurement report includes a cell ID and a corresponding signal measurement value. For example, when the UE is within coverage of PLMN2, the measurement report includes a cell ID corresponding to PLMN2 and a signal measurement value corresponding to the cell ID.

In a possible implementation, the first access network device determines, based on the signal quality between the UE and the second access network device being higher than the second threshold, that
In another possible implementation, when the first access network device determines that there is no cell corresponding to PLMN1 that can be switched to,
In a possible implementation, when the first access network device determines that there is no cell corresponding to PLMN1 that can be switched to (for example, the signal measurement value between the UE and the first access network device is lower than the first threshold, and the measurement report of the UE is empty, or the measurement report of the UE is not received within a specific period, or the signal measurement value in the measurement report is all lower than the threshold. This can indicate that there is no suitable cell corresponding to PLMN1 that can be switched to),
Step 910: The first access network device sends an RRC reconfiguration message to the UE.

The RRC reconfiguration message includes handover indication information. The handover indication information is used by the UE to switch a path to a second path through a second handover method. For example, the handover indication information may be a path switch indication (path switch indication).

Optionally, the RRC reconfiguration message further includes a cell ID corresponding to the PLMN2. The second radio access network device corresponding to the cell ID is located on the second path.

Optionally, the RRC reconfiguration message further includes an identifier of the PLMN2.

Step 911: The UE establishes a first session through the second access network device.

The UE switches the first path to the second path in a second handover manner based on the handover indication information and the cell ID corresponding to the PLMN2 by the UE. That is, the UE sends a session establishment request message or a session modification request message through the second radio access network device corresponding to the cell ID. The session establishment request message or the session modification request message includes the handover indication and the identifier of the first session. The handover indication is used to indicate to switch the first session transmitted on the first path to the second path for transmission. Alternatively, the UE sends the first request through the second path, where the first request is used to request to switch the session transmitted on the first path to the second path for transmission. For example, the session is a PDU session.

Optionally, if the first access network device does not send the cell ID corresponding to the PLMN2 to the UE, the UE may search for the cell ID corresponding to the PLMN2, and establish the first session through the second access network device corresponding to the cell ID.

It can be understood that, after step 911 is performed, the UE is connected to PLMN2 through the second access network device and transmits session data.

Step 912 (optional): The second access network device determines that the UE is handed over to the first path in the second handover manner.

In a possible implementation, the second access network device determines, based on the handover policy information, to switch the second path of the UE to the first path.

In a possible implementation, the second access network device determines, based on the signal quality between the UE and the first access network device being higher than a second threshold, to switch the second path of the UE to the first path. For example, when the signal quality of the TN between the UE and the first access network device is higher than the second threshold, the second access network device considers that the TN path is available, and therefore switches the UE to the first path.

In a possible implementation, the UE locally configures the value of the second threshold.

In a possible implementation, the UE reports a measurement report to the second access network device. The measurement report includes a signal measurement value corresponding to the first access network device. For example, if the UE is within coverage of the first access network device, the measurement report includes a signal measurement value between the UE and the first access network device.

Step 913 (optional): The second access network device sends an RRC reconfiguration message to the UE.

The RRC reconfiguration message includes handover indication information. The handover indication information is used by the UE to switch a path to the first path through the second handover mode. For example, the handover indication information may be a path switch indication (path switch indication).

Optionally, the RRC reconfiguration message further includes a cell ID corresponding to the PLMN 1. The first access network device corresponding to the cell ID is on the first path.

Step 914 (optional): The UE establishes a first session with the first access network device.

The UE, based on the handover indication information and the Cell ID corresponding to PLMN1, switches the second path to the first path through the second handover method. That is, the UE sends a session establishment request message or a session modification request message through the first access network device corresponding to the Cell ID. The session establishment request message or the session modification request message includes the handover indication and the identifier of the first session. The handover indication is used to indicate that the first session transmitted on the second path is to be switched to the first path for transmission. Alternatively, the UE sends a first request through the first path, where the first request is used to request to switch the session transmitted on the second path to the first path for transmission. For example, the session is a PDU session.

It should be noted that, in this embodiment, the UE may initially access a cell corresponding to PLMN2 (for example, there is no signal of PLMN1 when the UE initially accesses the cell)). In other words, steps 906 to 910 may be skipped, and a session is established through RAN2 (belonging to PLMN2)). Subsequently, when the second handover condition in step 912 is met, the second radio access network device performs step 913 again (for example, detecting that the signal quality of the cell corresponding to PLMN1 is higher than the second threshold)). That is, in a case in which the UE first accesses the cell corresponding to PLMN2, this embodiment may perform steps 900 to 905 and steps 911 to 914.

In the method 900, the access network device receives policy information that allows the UE to switch paths between different PLMNs in a second handover manner, and sends, to the UE, handover indication information that instructs the UE to switch paths in the second handover manner, thereby implementing control by the network on the terminal to switch paths. In this way, conflicts between different handover procedures are avoided.

The foregoing describes in detail the communication method side embodiments of this application with reference to FIG. 6 to FIG. 9. The following describes in detail the communications apparatus side embodiments of this application with reference to FIG. 10 to FIG. 12. It should be understood that the description of the apparatus embodiment corresponds to the description of the method embodiment. Therefore, for a part not described in detail, refer to the foregoing method embodiment.

FIG. 10 is a schematic structural diagram of a communications apparatus 1000 according to an embodiment of this application. As shown in FIG. 10, the apparatus 1000 may include a transceiver unit 1010 and a processing unit 1020. The transceiver unit 1010 may communicate with the outside, and the processing unit 1020 is configured to perform data processing. The transceiver unit 1010 may also be referred to as a communications interface or a transceiver unit.

In a possible design, the apparatus 1000 may implement steps or processes corresponding to the steps performed by the UE in the method embodiments described above. In this case, the processing unit 1020 is configured to perform operations related to processing of the UE in the method embodiments described above, and the transceiver unit 1010 is configured to perform operations related to receiving and sending of the UE in the method embodiments described above.

In another possible design, the apparatus 1000 may implement steps or processes corresponding to the steps performed by the access and mobility management network element in the method embodiments described above. In this case, the transceiver unit 1010 is configured to perform operations related to receiving and sending of the access and mobility management network element in the method embodiments described above, and the processing unit 1020 is configured to perform operations related to processing of the access and mobility management network element in the method embodiments described above.

In another possible design, the apparatus 1000 may implement steps or processes corresponding to the steps performed by the access network device in the method embodiments described above. In this case, the processing unit 1020 is configured to perform operations related to processing of the access network device in the method embodiments described above, and the transceiver unit 1010 is configured to perform operations related to receiving and sending of the access network device in the method embodiments described above.

It should be understood that the apparatus 1000 herein is embodied in the form of functional units. The term "unit" herein may refer to an application-specific integrated circuit (application specific integrated circuit, ASIC)), an electronic circuit, a processor (for example, a shared processor, a dedicated processor, or a group processor) configured to execute one or more software or firmware programs), a memory, a merged logic circuit, and/or other appropriate components that support the described functions. In an optional example, a person skilled in the art may understand that the apparatus 1000 may be specifically the transmit end in the foregoing embodiment, and may be configured to perform various processes and/or steps corresponding to the transmit end in the foregoing method embodiment. Alternatively, the apparatus 1000 may be specifically the receive end in the foregoing embodiment, and may be configured to perform various processes and/or steps corresponding to the receive end in the foregoing method embodiment. To avoid repetition, details are not described herein again.

The apparatus 1000 of each of the foregoing solutions has a function of implementing a corresponding step performed by the transmit end in the foregoing method. Alternatively, the apparatus 1000 of each of the foregoing solutions has a function of implementing a corresponding step performed by the receive end in the foregoing method. The function may be implemented by hardware, or may be implemented by hardware executing corresponding software. The hardware or software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver)). Other units, such as a processing unit, may be replaced by a processor, to separately perform the receiving and sending operations and related processing operations in each method embodiment.

In addition, the transceiver unit may further be a transceiver circuit (for example, may include a receiving circuit and a sending circuit). The processing unit may be a processing circuit. In embodiments of this application, the apparatus 1000 may be the receive end or the transmit end in the foregoing embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

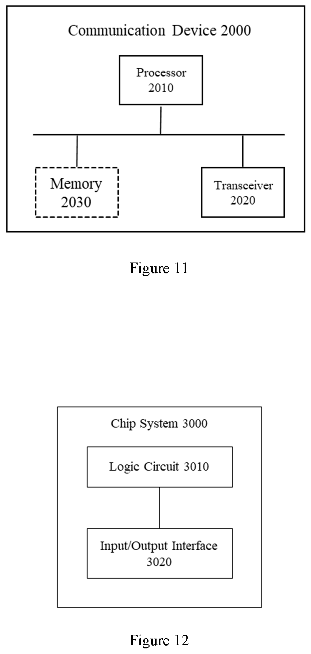

Figure 11 is a schematic structural diagram of a communication apparatus 2000 according to an embodiment of this application. As shown in Figure 11, the apparatus 2000 includes a processor 2010 and a transceiver 2020. The processor 2010 and the transceiver 2020 communicate with each other through an internal connection path. The processor 2010 is configured to execute instructions to control the transceiver 2020 to send and/or receive signals.

Optionally, the apparatus 2000 may further include a memory 2030. The memory 2030 communicates with the processor 2010 and the transceiver 2020 through an internal connection path. The memory 2030 is configured to store instructions, and the processor 2010 may execute the instructions stored in the memory 2030 to control the transceiver 2020 to send and/or receive signals.

In a possible implementation, the apparatus 2000 is configured to implement the various processes and steps corresponding to the UE in the foregoing method embodiments.

In another possible implementation, the apparatus 2000 is configured to implement the various processes and steps corresponding to the access and mobility management network element in the foregoing method embodiments.

In another possible implementation, the apparatus 2000 is configured to implement each procedure and step corresponding to the access network device in the foregoing method embodiments.

It should be understood that the apparatus 2000 may specifically be the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform each step and/or procedure corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute instructions stored in the memory. When the processor 2010 executes the instructions stored in the memory, the processor 2010 is configured to perform each step and/or procedure corresponding to the transmit end or the receive end in the foregoing method embodiments.

In an implementation process, the steps of the foregoing method may be completed by using an integrated logic circuit of hardware in the processor or an instruction in a form of software. The steps of the method disclosed with reference to the embodiments of this application may be directly performed by a hardware processor, or may be performed by using a combination of hardware and software modules in the processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory, and completes the steps of the foregoing method in combination with hardware of the processor. To avoid repetition, details are not described herein again.

It should be noted that the processor in this embodiment of this application may be an integrated circuit chip, and has a signal processing capability. In an implementation process, the steps in the foregoing method embodiments may be completed by using an integrated logic circuit of hardware in the processor or an instruction in a form of software. The processor may be a general purpose processor, a digital signal processor, an application-specific integrated circuit, a field programmable gate array or another programmable logic device, a discrete gate or transistor logic device, or a discrete hardware component. The processor in the embodiments of this application may implement or perform the methods, steps, and logical block diagrams disclosed in the embodiments of this application. The general-purpose processor may be a microprocessor, or the processor may be any conventional processor, or the like. Steps of the method disclosed with reference to the embodiments of this application may be directly performed and completed by a hardware decoding processor, or may be performed and completed by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory, and completes the steps of the foregoing method in combination with hardware of the processor.

It can be understood that, in the embodiments of this application, the memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external high-speed cache. By way of example but not limitation, many forms of RAM are available, such as static random access memory, dynamic random access memory, synchronous dynamic random access memory, double data rate synchronous dynamic random access memory, enhanced synchronous dynamic random access memory, and direct memory bus random access memory. It should be noted that the memory of the system and method described in this specification is intended to include, but not limited to, these and any other memory of a suitable type.

FIG. 12 is a schematic structural diagram of a chip system 3000 according to an embodiment of this application. As shown in FIG. 12, the chip system 3000 (or may also be referred to as a processing system)) includes a logic circuit 3010 and an input/output interface (input/output interface) 3020.

Among them, the logic circuit 3010 may be a processing circuit in the chip system 3000. The logic circuit 3010 may be coupled to a storage unit, invoke an instruction in the storage unit, so that the chip system 3000 can implement the methods and functions in the embodiments of this application. The input/output interface 3020 may be an input/output circuit in the chip system 3000, and is configured to output information processed by the chip system 3000, or input data or signaling information to be processed into the chip system 3000 for processing.

As a solution, the chip system 3000 is configured to implement the operations performed by the UE in the method embodiments described above.

As a solution, the chip system 3000 is configured to implement the operations performed by the access and mobility management network element in the method embodiments described above.

As a solution, the chip system 3000 is configured to implement the operations performed by the access network device in the method embodiments described above.

This embodiment of this application further provides a computer-readable storage medium, which stores computer instructions for implementing the methods performed by the UE, the access and mobility management network element, and the access network device in the method embodiments described above.

This embodiment of this application further provides a computer program product, comprising computer program code or instructions. When the computer program code or instructions are run on a computer, the computer is enabled to implement the methods performed by the UE, the access and mobility management network element, and the access network device in the method embodiments described above.

This embodiment of this application further provides a communication system, including the foregoing UE, the access and mobility management network element, and the access network device. Optionally, the communication system may further include a UDM or a PCF.

For the interpretation of related content and the beneficial effects in any one of the devices provided above, refer to the corresponding method embodiments provided above. These are not described in detail herein.

To facilitate understanding of the foregoing embodiments provided in this application, the following descriptions are made:
1) In this application, unless otherwise specified or there is a logical conflict, the terms and/or descriptions in different embodiments are consistent and can be mutually referenced. The technical features in different embodiments can be combined to form a new embodiment according to the internal logical relationship of the technical features.
2) In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists. In the cases, A and B may be singular or plural. In the text description of this application, the character "/" generally indicates that an association relationship between the associated objects before and after the character "/" is an "or" relationship. "At least one of the following items (pieces)" or a similar expression thereof refers to any combination of these items, including any combination of a single item (piece) or multiple items (pieces). For example, "at least one of a, b, and c (pieces)" may indicate the following cases: a, or, b, or, c, or, a and b, or, a and c, or, b and c, or, a, b, and c. In the cases, a, b, and c may be singular or plural.
3) In this application, "first," "second," and various numerical designations (e.g., #1, #2, etc.) indicate distinctions made for the purpose of convenient description. These designations are not intended to limit the scope of the embodiments of this application. For example, they distinguish between different messages, rather than being used to describe a specific sequence or order of precedence. It should be understood that the objects described in this way can be interchanged in appropriate circumstances, so as to describe solutions other than the embodiments of this application.
4) In this application, descriptions such as "when...," "in the case of...," and "if" refer to the device performing corresponding processing under certain objective conditions. These descriptions are not intended to limit the time, nor do they require the device to have a judgment action when implementing the processing. Nor do they imply the existence of other limitations.
5) In this application, "used to indicate" may include being used to directly indicate and being used to indirectly indicate. When it is described that certain indication information is used to indicate A, it may include that the indication information directly indicates A or indirectly indicates A, but this does not mean that the indication information must carry A.
   The indication method involved in the embodiments of this application should be understood as encompassing various methods that can enable a to-be-indicated party to learn the to-be-indicated information. The to-be-indicated information may be sent as a whole, or may be divided into multiple pieces of sub-information and sent separately. Moreover, the sending periods and/or sending opportunities of these pieces of sub-information may be the same or different. This application does not impose any specific limitation on the sending method.
6) In the embodiments of this application, the "indication information" may be an explicit indication, that is, directly indicated through signaling, or obtained by combining parameters indicated by the signaling with other rules or other parameters or through derivation. It may also be an implicit indication, that is, obtained by combining rules or relationships or other parameters or through derivation. This application does not impose any specific limitation on this.
6) In this application, the "protocol" may refer to a standard protocol in the communications field. For example, it may include a 5G protocol, an NR protocol, and a related protocol applied to a future communications system. This application does not impose any specific limitation on this. "Predefinition" may include predefinition. For example, it may be defined by a protocol. "Preconfiguration" may be implemented by pre-storing corresponding code, tables, or other methods that can be used to indicate related information in a device. This application does not impose any specific limitation on its specific implementation method.
7) In this application, "communication" may also be described as "data transmission," "information transmission," "data processing," and the like. "Transmission" includes "sending" and "receiving."

A person of ordinary skill in the art can realize that, in combination with the descriptions of the embodiments disclosed in this specification, the units and algorithm steps of each example can be implemented by electronic hardware or a combination of computer software and electronic hardware. Whether these functions are performed by hardware or software depends on specific application and design constraints of the technical solutions. Professional technicians can use different methods to implement the described functions for each specific application. However, such implementation should not be considered as going beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored. Or not perform. In addition, the displayed or discussed mutual couplings or direct couplings or communication connections may be implemented by using some interfaces, and the indirect couplings or communication connections between apparatuses or units may be implemented in electrical, mechanical, or other forms.

The units described as separate components may or may not be physically separate. The parts displayed as units may or may not be physical units, that is, they may be located in one place, or may be distributed over multiple network units. According to actual needs, some or all of the units may be selected to achieve the objectives of the solutions in this embodiment.

Additionally, in the various embodiments of this application, the functional units may be integrated into one processing unit, or may exist physically as separate units. Alternatively, two or more units may be integrated into one unit.

If the functions are implemented in the form of software functional units and sold or used as independent products, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device to perform all or some of the steps of the methods described in the various embodiments of this application. The aforementioned storage medium includes: a USB flash drive, a removable hard disk, a read-only memory, a random access memory, a magnetic disk, or an optical disc of any kind that can store program code.

The above description is merely a specific implementation of this application. However, the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal from a network, first information, wherein the first information indicates that the network does not support a first handover mode, or indicates that the terminal is allowed to switch a path by using a second handover mode, the first handover mode is a handover mode initiated by a radio access network device, and the second handover mode is a handover mode initiated by the terminal; and
switching, by the terminal based on the first information, a first path to a second path by using the second handover mode, wherein the first path comprises a connection between the terminal and a first access network device, and the second path comprises a connection between the terminal and a second access network device.

2. The method according to claim 1, wherein switching, by the terminal based on the first information, the first path to the second path by using the second handover mode comprises:
sending, by the terminal through the second path, a session establishment request message or a session modification request message, wherein the session establishment request message or the session modification request message comprises a handover indication and an identifier of a first session, and the handover indication indicates that the first session transmitted through the first path is to be switched to the second path for transmission; or
sending, by the terminal through the second path, a first request, wherein the first request requests that a session transmitted through the first path be switched to the second path for transmissionhandover mode.

3. The method according to claim 1 or 2, wherein, before switching the first path to the second path by using the second handover mode, the method further comprises:
in response to a first handover condition being satisfied, switching, by the terminal, the first path to the second path by using the second handover mode, wherein the first handover condition is that signal quality between the terminal and the first access network device is lower than a first thresholdhandover modehandover mode.

4. The method according to any one of claims 1 to 3, wherein a radio access technology, RAT, corresponding to the first access network device is a first RAT, a RAT corresponding to the second access network device is a second RAT, and the first information indicating that the network does not support the first handover mode, or indicating that the terminal is allowed to switch the path by using the second handover mode, comprises:
the first information indicating that the network does not support switching between the first RAT and the second RAT by using the first handover mode, or indicating that the terminal is allowed to switch between the first RAT and the second RAT by using the second handover mode.

5. The method according to any one of claims 1 to 4, wherein the first information comprises policy information, the policy information indicates preferential access to an access network device corresponding to a first RAT type, and the method further comprises:
switching, by the terminal, the second path to the first path by using the second handover mode, wherein the first path comprises the connection between the terminal and the first access network device, and the RAT corresponding to the first access network device is the first RAT.

6. The method according to claim 5, wherein switching the second path to the first path by using the second handover mode comprises:
in response to a second handover condition being satisfied, switching, by the terminal, the second path to the first path by using the second handover mode, wherein the second handover condition is that signal quality between the terminal and an access network device corresponding to the first RAT type is higher than a second thresholdhandover modehandover mode.

7. A communication method, comprising:
sending first information to a terminal, wherein the first information indicates that a network does not support a first handover mode, or indicates that the terminal is allowed to switch a path by using a second handover mode, the first handover mode is a handover mode initiated by a radio access network device, and the second handover mode is a handover mode initiated by the terminal; and
receiving, through a second path, a first request sent by the terminal, wherein the first request requests that a session transmitted through a first path be switched to the second path for transmission, the first path comprises a connection between the terminal and a first access network device, and the second path comprises a connection between the terminal and a second access network device.

8. The method according to claim 7, wherein, before sending the first information to the terminal, the method further comprises:
determining the first information based on a configuration of a network management system; or
receiving the first information sent by a policy control network element or a data management network element.

9. The method according to claim 7 or 8, wherein the first request is a session establishment request message or a session modification request message, the session establishment request message or the session modification request message comprises a handover indication and an identifier of a first session, and the handover indication indicates that the first session transmitted through the first path is to be switched to the second path for transmission.

10. A communication method, comprising:
receiving handover policy information, wherein the handover policy information indicates that a terminal is allowed to switch a path by using a second handover mode, and the second handover mode is a handover mode initiated by the terminal; and
sending, based on the handover policy information, handover configuration information to the terminal, wherein the handover configuration information is used by the terminal to switch the path by using the second handover mode.

11. The method according to claim 10, wherein the handover configuration information comprises a first handover condition, and the first handover condition is used by the terminal to switch the path by using the second handover mode when signal quality between the terminal and an access network device is lower than a first threshold.

12. The method according to claim 11, wherein the handover configuration information further comprises a second handover condition, and the second handover condition is used by the terminal to switch back to a path corresponding to the access network device when signal quality between the terminal and the access network device is higher than a second threshold.

13. The method according to any one of claims 10 to 12, wherein the method further comprises:
sending first information to the terminal, wherein the first information indicates that a network does not support a first handover mode, and the first handover mode is a handover mode initiated by a radio access network device.

14. The method according to claim 13, wherein the method further comprises:
determining the first information based on a configuration of a network management system; or
receiving the first information sent by an access and mobility management network element.

15. A communication method, comprising:
receiving handover policy information, wherein the handover policy information indicates that a terminal is allowed to switch a path by using a second handover mode, and the second handover mode is a handover mode initiated by the terminal; and
sending, based on the handover policy information, path switching indication information to the terminal, wherein the path switching indication information is used by the terminal to switch a first path to a second path by using the second handover mode, the first path comprises a connection between the terminal and a first access network device, and the second path comprises a connection between the terminal and a second access network device.

16. The method according to claim 15, wherein sending the path switching indication information to the terminal based on the handover policy information comprises:
determining, based on the handover policy information, to switch the first path of the terminal to the second path; and
sending the path switching indication information to the terminal.

17. The method according to claim 15 or 16, wherein, before determining, based on the handover policy information, to switch the first path of the terminal to the second path, the method further comprises:
receiving a measurement report sent by the terminal, wherein the measurement report comprises signal quality of a first cell corresponding to the first access network device, and the signal quality of the first cell is lower than a first threshold corresponding to the second handover modehandover mode.

18. The method according to any one of claims 15 to 17, wherein, before sending the path switching indication information to the terminal, the method further comprises:
determining the path switching indication information based on first information, wherein the first information indicates that a network does not support a first handover mode, and the first handover mode is a handover mode initiated by a radio access network device.

19. The method according to claim 18, wherein the method further comprises:
determining the first information based on a configuration of a network management system; or
receiving the first information sent by an access and mobility management network element.

20. A communication method, comprising:
receiving, by a terminal through a first access network device, path switching indication information; and
switching, by the terminal based on the path switching indication information, a first path to a second path by using a second handover mode, wherein the second handover mode is a handover mode initiated by the terminal, the first path comprises a connection between the terminal and the first access network device, and the second path comprises a connection between the terminal and a second access network device.

21. The method according to claim 20, wherein, before receiving the path switching indication information through the first access network device, the method further comprises:
sending, by the terminal, capability information, wherein the capability information indicates that the terminal supports switching a path by using the second handover modehandover mode.

22. The method according to claim 20 or 21, wherein the method further comprises:
sending a measurement report to the first access network device, wherein the measurement report comprises signal quality of a first cell corresponding to the first access network device, an identifier of a second cell, and signal quality corresponding to the second cell; and
receiving the identifier of the second cell, and switching to the second cell on the second path based on the identifier of the second cell.

23. A terminal, **characterized in that** the terminal comprises a module configured to perform the communication method according to any one of claims 1 to 6, or comprises a module configured to perform the communication method according to any one of claims 20 to 22.

24. An access and mobility management network element, **characterized in that** the access and mobility management network element comprises a module configured to perform the communication method according to any one of claims 7 to 9.

25. An access network device, **characterized in that** the access network device comprises a module configured to perform the communication method according to any one of claims 10 to 19.

26. A computer-readable storage medium, **characterized in that** the computer-readable storage medium includes a computer program or instructions, and when the computer program or instructions are run on a computer, the computer is caused to perform the communication method according to any one of claims 1 to 22.
